# EUROPÄISCHE PATENTSCHRIFT

(11) **EP 2 130 694 B1**
(45) Veröffentlichungstag und Bekanntmachung des Hinweises auf die Patenterteilung: **04.01.2012**
(21) Anmeldenummer: 08400036.3
(22) Anmeldetag: 26.07.2008
(51) Int. Cl.: B60D 1/06, B60D 1/52

(54) **Anhängekupplung**
Tow bar
Attelage

(30) Priorität: 06.06.2008 DE 202008007581 U; 06.06.2008 DE 202008007582 U
(43) Veröffentlichungstag der Anmeldung: 09.12.2009
(73) Patentinhaber: WESTFALIA - Automotive GmbH, 33378 Rheda-Wiedenbrück (DE)
(72) Erfinder: Abels, Frank, D-29633 Munster (DE)
(74) Vertreter: Bregenzer, Michael

(56) Entgegenhaltungen:
- DE-A1- 10 355 854
- DE-A1- 19 749 544
- DE-A1-102007 001 969
- DE-A1-102008 018 822
- GB-A- 2 122 961

## Beschreibung

Die Erfindung betrifft eine Anhängekupplung mit einem Halter zur Befestigung an einem Kraftfahrzeug, insbesondere einem Personen-Kraftfahrzeug, mit einem in einer Einsteckrichtung in eine Steckaufnahme des Halters einsteckbaren Kupplungsarm zum Anhängen eines Anhängers, und mit einer am Halter angeordneten Verriegelungseinrichtung zur Verriegelung des Kupplungsarms an dem Halter, gemäß dem Oberbegriff des Anspruchs 1.

Bei einer derartigen, aus DE 197 49 544 A1 bekannten Anhängekupplung betätigt ein Servomotor einen Bolzen als ein Formschlusselement. Als Formschlusskontur ist am Kupplungsarm ein Sackloch beziehungsweise eine Schaftbohrung vorgesehen. Bei dieser bekannten Anhängekupplung besteht die Gefahr, dass der Kupplungsarm nicht spielfrei am Halter befestigt ist.

Es ist daher die Aufgabe der vorliegenden Erfindung, eine spielfreie, zuverlässige Verriegelung eines in eine Steckaufnahme eines Halters einer Anhängekupplung einsteckbaren Kupplungsarmes bereitzustellen.

Zur Lösung der Aufgabe ist eine Anhängekupplung gemäß der technischen Lehre des Anspruchs 1 vorgesehen.

Ein Grundgedanke der Erfindung ist es, dass das Formschlusselement mit der Formschlusskontur im Sinne eines festen Anpressens verspannt wird. Der Verriegelungsantrieb enthält ein Spanngetriebe, um die Kraft des Verriegelungsmotors im Sinne eines Verspannens zu verstärken. Das Formschlusselement bildet sozusagen einen Presskörper oder Spannkörper, der gegen die Formschlusskontur, vorzugsweise eine Formschlussaufnahme, gepresst wird.

Der Formschluss, der auf diese Weise erzielbar ist, lässt sich verhältnismäßig leicht lösen. Bei einer in DE 197 49 544 A1 alternativ vorgeschlagenen Lösung wird nämlich eine Schraube in ein Ende eines Kupplungsarmes eingeschraubt. Insbesondere nach längerem Fahrbetrieb droht die Schraube im Gewinde festzubacken, so dass sie nicht mehr gelöst werden kann. Diese Gefahr ist bei dem erfindungsgemäß hergestellten Formschluss nicht gegeben.

Es versteht sich, dass mittels des Verriegelungsantriebs auch mehrere Formschlusselemente mit korrespondierenden Formschlusskonturen verbunden werden können.

Die Anhängekupplung hat eine Steuerung zum erneuten Anschalten des Verriegelungsantriebs in Richtung der Verriegelungsstellung für ein Spannen des Kupplungsarms am Halter, wobei die Steuerung den Verriegelungsantrieb beispielsweise zyklisch oder bei einer Lösebedingung ansteuert. Auch ein externer Steuerbefehl, beispielsweise das Betätigen von Leuchten, zum Beispiel Bremsleuchten, Blinkern oder dergleichen, kann von der Steuerung erfasst werden, um infolgedessen jeweils den verriegelungsantrieb kurz einzuschalten, um das mindestens eine Formschlusselement mit der Formschlusskontur zu verspannen. Die Steuerung realisiert die vorgenannte Nachspannfunktion, solange sie zur Einnahme der Verriegelungsstellung angesteuert ist, das heißt beispielsweise nach Erhalt eines Befehls zur Einnahme der Verriegelungsstellung, solange die Steuerung noch keinen Entriegelungsbefehl zum Entriegeln der Verriegelungseinrichtung erhalten hat. Die Steuerung aktiviert das Nachtakten der Verspannbewegung vorzugsweise nach einem erstmaligen Erreichen der Verriegelungsstellung.

Die Lösebedingung kann beispielsweise ein Lösen des mindestens einen Formschlusselements und der Formschlusskontur um ein vorbestimmtes Längenmaß umfassen. Beispielsweise ist hierfür eine Längenmesseinrichtung, ein Positionsschalter oder dergleichen, der die Position des Formschlusselements oder des Verriegelungsantriebs erfasst, vorgesehen.

Ein weiterer Aspekt der Erfindung ist es, dass der Verriegelungsantrieb am Halter angeordnet ist, so dass am Kupplungsarm an sich keine beweglichen Komponenten nötig sind, die beispielsweise beim Fahrbetrieb beschädigt werden könnten, verschmutzen könnten oder dergleichen.

Der Kupplungsarm ist bei der Anhängekupplung gemäß der Erfindung fest am Halter verspannt, wenn die Verriegelungseinrichtung in ihrer Verriegelungsstellung ist. Beim Fahrbetrieb ist daher zwischen dem Kupplungsarm und dem Halter kein Spiel oder zumindest nur ein verhältnismäßig geringes Spiel.

Das Spanngetriebe umfasst vorteilhaft ein Spindelgetriebe, ein Schneckengetriebe, ein Keilgetriebe oder dergleichen. Es versteht sich, dass mehrere verschiedene Getriebetypen zu einem einzigen Spanngetriebe kombiniert sein können, so dass die Vorteile der einzelnen Getriebearten insgesamt zum Tragen kommen.

Das Spanngetriebe umfasst vorteilhaft ein Schraubgewinde zum Einschrauben in eine Schraubaufnahme. Das Schraubgewinde ist beispielsweise am Formschlusselement selbst oder auch an einem das Formschlusselement tragenden Formschlusselement-Träger angeordnet. Das Formschlusselement ist vorzugsweise an einem freien Ende des Formschlusselement-Trägers angeordnet. Zweckmäßig ist als Formschlusselement beispielsweise eine Kugel vorgesehen.

Die vorgenannte Schraubaufnahme ist zweckmäßigerweise am Halter angeordnet. Es ist auch möglich, die Schraubaufnahme beispielsweise an einem Träger für die Verriegelungseinrichtung, beispielsweise einem den Verriegelungsantrieb aufnehmenden Antriebsgehäuse, vorzusehen. Die Schraubaufnahme kann sich auch vom Verriegelungsträger beziehungsweise Antriebsgehäuse in den Halter hinein erstrecken, so dass das Formschlusselement oder der dieses haltende Formschlusselement-Träger durch beide Gewindeabschnitte durchschraubbar ist.

Vorzugsweise ist das Spanngetriebe selbsthemmend. Dies verhindert, dass sich das Spanngetriebe beziehungsweise der Formschluss selbsttätig löst, beispielsweise durch Vibrationen beim Fahrbetrieb des Kraftfahrzeuges.

Vorzugsweise reduziert das Spanngetriebe eine Drehzahl des Verriegelungsantriebs und bildet dementsprechend ein Untersetzungsgetriebe, das eine Drehzahl des Verriegelungsantriebes abtriebsseitig herabsetzt.

Der Verriegelungsantrieb ist zweckmäßigerweise zumindest teilweise in einem Antriebsgehäuse angeordnet. Somit ist der Verriegelungsantrieb vor Umwelteinflüssen geschützt. Das Antriebsgehäuse bildet beispielsweise einen Bestandteil des Halters. Bevorzugt ist eine Ausführungsform, bei der das Antriebsgehäuse als ein Antriebsmodul ausgestaltet ist, das an einem die Steckaufnahme bereitstellenden Haltergehäuse des Halters angeordnet ist, zweckmäßigerweise mit diesem fest verbunden ist. Beispielsweise könnten die beiden Komponenten mittels Schrauben, Kleben oder dergleichen miteinander verbunden sein. Auch ein Verschweißen ist vorteilhaft. Ferner können beide Komponenten auch beispielsweise fest mit einem gemeinsamen Träger, beispielsweise einem Querträger am Heck des Kraftfahrzeugs, verbunden sein, so dass zwischen den beiden Bauteilen Haltergehäuse und Antriebsmodul eine feste Verbindung gewährleistet ist.

Das mindestens eine Formschlusselement umfasst beispielsweise eine Kugel, eine Walze, einen Bolzen, der zweckmäßigerweise an seinem freien Ende eine Einführschräge aufweist, einen Keilkörper mit einer Keilschräge, eine Zahnstruktur oder dergleichen.

Bei der Formschlusskontur ist es vorteilhaft, wenn sie beispielsweise eine Formschlussaufnahme ist. Hier ist beispielsweise eine Kugelkalotte, ein Sackloch, eine Rinne oder eine Ringnut, eine Keilschräge oder dergleichen vorteilhaft.

In diesem Zusammenhang sei erwähnt, dass prinzipiell das Formschlusselement auch eine Formschlussaufnahme haben kann, während die feststehende Formschlusskontur auch einen Formschlussvorsprung, beispielsweise einen kugelartigen Vorsprung, einen Bolzenvorsprung oder dergleichen, umfassen kann.

Vorteilhaft ist das Formschlusselement beweglich am Halter gelagert, während die Formschlusskontur am Kupplungsarm angeordnet ist.

An dem Halter, insbesondere einem die Steckaufnahme aufweisenden Haltergehäuse, ist zweckmäßigerweise ein Führungskanal zur Führung des mindestens einen Formschlusselements und/oder des Formschlusselement-Trägers angeordnet. Der Führungskanal kann beispielsweise ein Schraubgewinde aufweisen, um so die vorgenannte Schraubaufnahme zu bilden. Der Führungskanal erstreckt sich zweckmäßigerweise bis zur Steckaufnahme.

Das Formschlusselement wirkt zweckmäßigerweise seitlich auf einen Außenumfang eines Steckendes des Kupplungsarms. Beispielsweise wirkt das Formschlusselement tangential oder radial auf den Kupplungsarm.

Der Verriegelungsmotor ist beispielsweise ein elektrischer und/oder fluidischer Motor, beispielsweise ein pneumatischer oder hydraulischer Motor.

Die Verriegelungseinrichtung ist zweckmäßigerweise zum Verspannen des Kupplungsarms quer zu der Einsteckrichtung und/oder längs der Einsteckrichtung ausgestaltet. Zum Querverspannen wirkt das mindestens eine Formschlusselement beispielsweise auf eine Außenumfangsfläche des Kupplungsarms und presst den Kupplungsarm gegen eine Seitenfläche oder Seitenwandungsfläche an der Steckaufnahme.

Zum Verspannen längs der Einrichtung verläuft eine Spannkraft des Verriegelungsantriebs beispielsweise entlang der Einsteckrichtung, beispielsweise vertikal nach oben. Es ist aber auch möglich, dass die Formschlusskontur und/oder das Formschlusselement eine Konturgestaltung aufweisen, mit der eine Kraftumlenkung von einer quer zur Einsteckrichtung verlaufenden Spannkraft des Verriegelungsantriebs in eine längs der Einsteckrichtung verlaufende Spannkraft realisierbar ist.

Vorteilhaft weist die Anhängekupplung Haltemittel zum Halten des Kupplungsarms für eine Verriegelung des Kupplungsarms durch die Verriegelungseinrichtung auf.

Die Haltemittel halten den Kupplungsarm unabhängig von der Verriegelungseinrichtung und bilden eine Art Bereitstellungsmittel für den Kupplungsarm. Die Haltemittel halten den Kupplungsarm zumindest so lange, bis der Verriegelungsantrieb den Kupplungsarm beispielsweise elektrisch, pneumatisch oder hydraulisch verriegelt. Die Gefahr einer Fehlverriegelung ist gering, da die Haltemittel den Kupplungsarm in der Steckaufnahme zweckmäßigerweise so positionieren, dass er in seiner zur Verriegelung vorgesehenen Verriegelungsposition ist.

Eine Variante der Erfindung kann vorsehen, dass als Haltemittel beispielsweise mindestens ein Haltemagnet am Halter und/oder am Kupplungsarm vorgesehen ist, um den Kupplungsarm in der Steckaufnahme zu halten.

Besonders bevorzugt sind jedoch Rastmittel mit mindestens einem zwischen einer Raststellung und einer Freigabestellung beweglich gelagerten Rastkörper sowie mindestens einer dem Rastkörper zugeordneten Rastkontur, beispielsweise einer Rastaufnahme oder einem Rastvorsprung, zum Verrasten des Kupplungsarms an dem Halter beim Einstecken in die Steckaufnahme. Der Rastkörper ist beispielsweise quer zur Einsteckrichtung beweglich gelagert. Es ist möglich, den Rastkörper am Kupplungsarm oder auch am Halter beweglich zu lagern, wobei korrespondierend dazu die Rastkontur dann am Halter beziehungsweise Kupplungsarm angeordnet ist. Ferner ist es möglich, dass der Rastkörper eine Rastaufnahme aufweist zum Verrasten mit der dann einen Rastvorsprung aufweisenden Rastkontur. Die Rastkontur umfasst in diesem Fall beispielsweise einen feststehenden Rastvorsprung, insbesondere einen kugelförmigen oder gebogenen Rastvorsprung.

Der Rastkörper ist zweckmäßigerweise in seine den Kupplungsarm am Halter haltende Raststellung durch eine Federanordnung federbelastet. Somit rastet der Rastkörper selbsttätig in die Rastkontur ein.

In der Raststellung greifen der Rastkörper und die Rastkontur vorzugsweise formschlüssig ineinander, was eine spielarme oder spielfreie Verrastung ermöglicht. Es versteht sich, dass der Rastkörper und die Rastkontur auch punktförmig oder linienförmig miteinander in Kontakt stehen können.

Ein erster Aspekt der Erfindung ist es, dass die Haltemittel jedenfalls den Kupplungsarm bis zum Verriegeln durch die Verriegelungseinrichtung halten, jedoch nicht so fest halten, dass ein Fahrbetrieb des Zugfahrzeuges mit angehängtem Anhänger möglich ist. Dementsprechend sieht eine Variante der Erfindung vor, dass eine Haltekraft der Haltemittel zum Halten des Kupplungsarms am Halter so bemessen ist, dass der Kupplungsarm bei entriegelter Verriegelungseinrichtung bei einer Belastung durch den Anhänger aus dem Halter gezogen wird.

Eine andere Variante der Erfindung sieht vor, dass eine Haltekraft der Haltemittel zum Halten des Kupplungsarms am Halter wesentlich größer ist. In dieser Ausgestaltung halten die Haltemittel den Kupplungsarm am Halter unabhängig von der Verriegelungseinrichtung für einen Zugbetrieb mit an dem Kupplungsarm angehängtem Anhänger, einem aufgesetzten Lastenträger oder dergleichen, und bilden den Kupplungsarm sicher verriegelnde Sicherungsmittel. Mindestens einer der Rastkörper ist in diesem Fall zweckmäßigerweise ein Sicherungskörper. Man könnte auch sagen, dass bei dieser Ausgestaltung die Haltemittel sozusagen eine zweite, redundante Verriegelungseinrichtung bilden. Die motorische oder manuelle Verriegelungseinrichtung bildet dann eine erste Verriegelungseinrichtung, während die Haltemittel eine zweite, von der ersten Verriegelungseinrichtung unabhängige und den Kupplungsarm redundant verriegelnde zweite Verriegelungseinrichtung bilden. Die erste und die zweite Verriegelungseinrichtung sind voneinander unabhängig betätigbar. Jedenfalls ist es vorteilhaft, dass der Kupplungsarm auch bei einer teilverriegelten, fehlverriegelten oder gar entriegelten ersten Verriegelung am Halter durch die Haltemittel bzw. zweiten Verriegelungsmittel sicher gehalten wird.

Der Sicherungskörper umfasst zweckmäßigerweise einen Sicherungsbolzen zum Eingriff in eine Sicherungsaufnahme am Halter. Der Sicherungskörper greift beispielsweise in der Raststellung beziehungsweise Sicherungsstellung quer zu der Einsteckrichtung in die Sicherungsaufnahme ein. Dadurch ist ein besonders fester Halt möglich.

Zum Entsichern beziehungsweise zum Lösen der Rastverbindung zwischen Kupplungsarm und Halter ist vorteilhaft eine Mitnahmeeinrichtung zu einer Mitnahmekopplung des Verriegelungsantriebs mit dem mindestens einen Rastkörper oder Sicherungskörper und/oder mit einer den mindestens einen Rastkörper in seine Raststellung belastende Federanordnung bei einer Entriegelungsbewegung des Verriegelungsantriebs von der Verriegelungsstellung in die Entriegelungsstellung vorgesehen. Der Verriegelungsantrieb nimmt bei der Entriegelungsbewegung den Rastkörper oder Sicherungskörper in eine den Kupplungsarm freigebende Freigabestellung mit. Der Verriegelungsantrieb spannt die Federanordnung.

Die Federanordnung entlastet bei dem Spannen durch die Mitnahmeeinrichtung zweckmäßigerweise den mindestens einen Rastkörper und/oder Sicherungskörper, so dass der mindestens eine Rastkörper außer Eingriff mit der mindestens einen Rastkontur bewegbar ist, beispielsweise beim Entnehmen des Kupplungsarms aus der Steckaufnahme am Halter.

Die Mitnahmeeinrichtung ist zweckmäßigerweise zu einem Lösen der Mitnahmekopplung am Ende der Entriegelungsbewegung ausgestaltet, und zwar derart, dass der mindestens eine Rastkörper und/oder die Federanordnung für ein Wiederverrasten des Kupplungsarms am Halter freikommen. Die Mitnahmekopplung wird also am Ende der Verriegelungsbewegung aufgehoben, so dass der Rastkörper beziehungsweise die Federanordnung beispielsweise bereits wieder in die Raststellung nach vorn in Richtung Kupplungsarm beweglich sind oder sich dorthin bewegen, während die motorische oder manuell betätigbare Verriegelungseinrichtung in der Entriegelungsstellung ist. Die Anhängekupplung ist also zum Einstecken des Kupplungsarmes wieder bereit.

Die Mitnahmeeinrichtung umfasst zweckmäßigerweise einen Mitnahmeanschlag sowie eine beweglich gelagerte Klinke mit einer Freigabeanschlagfläche und einer Mitnehmerfläche. Bei der Entriegelungsbewegung des Verriegelungsantriebs schlägt der Mitnahmeanschlag zu der Mitnahmekopplung an der Mitnehmerfläche der Klinke an oder die Mitnehmerfläche der Klinke schlägt an dem Mitnahmeanschlag an. Die Freigabeanschlagfläche hingegen wird am Ende der Entriegelungsbewegung aktiv und schlägt dann an einem Freigabeanschlag zum Lösen der Mitnahmekopplung an. Der Verriegelungsantrieb macht dann noch ein Stück des Weges in Richtung seiner Entriegelungsstellung, während die Federanordnung oder der Rastkörper schon vom Verriegelungsantrieb entkoppelt sind.

Der Mitnahmeanschlag ist zweckmäßigerweise an dem Verriegelungsantrieb angeordnet. Die Klinke ist mit dem mindestens einen Rastkörper und/oder der Federanordnung verbunden oder zumindest bewegungsgekoppelt. Es versteht sich, dass auch die umgekehrte Konfiguration prinzipiell möglich ist.

Die Klinke weist zweckmäßigerweise eine Gleitfläche auf, an der der Verriegelungsantrieb bei einer der Entriegelungsbewegung entgegengesetzten Verriegelungsbewegung an der Klinke entlanggleitet.

Alternativ zu der oben genannten Mitnahme mit einer Klinke wäre auch eine reibschlüssige Mitnahme möglich. Beispielsweise könnte vorgesehen sein, dass die Mitnahmeeinrichtung einen Nocken mit einer Reibkontur aufweist, die auf einem Teil der Verriegelungsbewegung eine reibschlüssige Verbindung beziehungsweise Kopplung zwischen Verriegelungsantrieb und Rastkörper und/oder Federanordnung bereitstellt. Anstelle eines Nockens könnte auch eine exzentrische Reibschlussfläche vorgesehen sein, die nur auf einem Teilabschnitt des Entriegelungsweges des Verriegelungsantriebs in reibschlüssigem Eingriff mit dem Rastkörper und/oder der Federanordnung ist.

Eine weitere, im Ausführungsbeispiel nicht dargestellte Variante der Erfindung sieht vor, dass die Mitnahmeeinrichtung ein Mitnahmegetriebe aufweist, insbesondere ein Zahngetriebe. Beispielsweise könnten eine Zahnung und ein Zahnvorsprung vorgesehen sein, die auf einem Teilabschnitt des Entriegelungswegs des Verriegelungsantriebs in Eingriff miteinander sind und somit eine Kopplung zwischen einerseits dem Rastkörper und/oder der Federanordnung und andererseits dem Verriegelungsantrieb realisieren. Insbesondere am Ende des Entriegelungsweges oder in der Entriegelungsstellung gelangen die beiden Zahnkonturen außer Eingriff, beispielsweise durch eine Rückstellbewegung mittels einer Nocke, eines Anschlages, eines elektromagnetischen Antriebs oder dergleichen.

Weiter ist es möglich, dass die Mitnahmeeinrichtung beispielsweise ein Hebelgetriebe umfasst.

Die Mitnahmeeinrichtung weist zweckmäßigerweise einen Verdrängerkörper zum Verdrängen des mindestens einen Rastkörpers aus der Rastkontur auf. Der Verdrängerkörper ist in die Rastkontur hinein bewegbar und verdrängt den Rastkörper aus der Rastkontur heraus.

Die Verriegelungseinrichtung und die Rastmittel sind zweckmäßigerweise derart ausgestaltet, dass bei einer Entriegelungsbewegung des Verriegelungsantriebs zuerst die Verriegelungseinrichtung entriegelt wird, beispielsweise das Formschlusselement und die Formschlusskontur außer Eingriff gelangen, und sodann erst die Rastmittel außer Eingriff gelangen. Diese Maßnahme kann beispielsweise dazu vorteilhaft sein, dass zunächst eine Verspannung des Kupplungsarms am Halter aufgehoben wird und dann erst die Verrastung.

Zur vorstehenden Maßnahme kann vorteilhaft vorgesehen sein, dass eine Eindringtiefe des mindestens einen Rastkörpers und der Rastkontur ineinander größer ist als eine Eindringtiefe des mindestens einen Formschlusselements und der Formschlusskontur ineinander. Beispielsweise steht der Rastkörper in seiner Raststellung weiter in Richtung des Kupplungsarms vor als das mindestens eine Formschlusselement in seiner Verriegelungsstellung. Es wäre aber auch denkbar, dass die Mitnahmeeinrichtung ein Getriebe umfasst, das die obige Bewegungsfolge beim Entriegeln des Kupplungsarmes realisiert. Dann ist es nicht unbedingt nötig, dass die Eindringtiefen von Rastkörper und Formschlusselement in der obigen Ausgestaltung realisiert sind.

An, in oder neben dem mindestens einen Rastkörper oder der Rastkontur ist zweckmäßigerweise ein Betätigungselement eines elektrischen Schalters zum Schalten des Verriegelungsantriebs angeordnet. Bei einem Verrasten der Rastmittel ineinander betätigt das Betätigungselement den Verriegelungsantrieb, schaltet diesen beispielsweise ein oder aus. Das Betätigungselement steht zweckmäßigerweise im unbetätigten Zustand in die Rastkontur vor, wenn es bezüglich der Rastkontur beweglich gelagert ist, während es bei einer Lagerung bezüglich des Rastkörpers im unbetätigten Zustand zweckmäßigerweise vor den Rastkörper vorsteht.

Das Betätigungselement ist zweckmäßigerweise an dem Rastkörper beweglich gelagert. Beispielsweise bildet das Betätigungselement einen an oder in dem mindestens einen Rastkörper beweglich gelagerten Taststößel. Der Taststößel ist in einem Innenraum des beispielsweise als eine Art Hohlwelle ausgestalteten Betätigungselements angeordnet.

Wie oben bereits erläutert, ist es möglich, dass der Rastkörper am Halter und die Rastkontur am Kupplungsarm oder umgekehrt angeordnet sind. Ferner können Rastkonturen am Halter und am Kupplungsarm sowie dann Rastkörper am Kupplungsarm und ebenfalls am Halter angeordnet sein.

Zweckmäßigerweise sind die Rastmittel so getroffen, dass der mindestens eine Rastkörper in seiner in die Rastkontur eingerasteten Raststellung bei entriegelter manuell betätigbarer oder motorischer Verriegelungseinrichtung ein Spiel des Kupplungsarms bezüglich des Halters zulässt. Die Verriegelungseinrichtung hingegen ist vorteilhaft so ausgestaltet, dass sie den Kupplungsarm am Halter spielfrei oder zumindest im Wesentlichen spielfrei verriegelt. Wenn die motorische Verriegelungseinrichtung nicht greift beziehungsweise nicht zuverlässig verriegelt, die Rastmittel jedoch miteinander verrastet sind, merkt der Bediener am Spiel zwischen Kupplungsarm und Halter, dass die Verriegelung nicht einwandfrei ist.

Dem mindestens einen Rastkörper ist zweckmäßigerweise eine Freigabe-Halteeinrichtung zum Halten in der Freigabestellung zugeordnet. Die Freigabe-Halteeinrichtung umfasst einen Auslöser zum Freigeben des mindestens einen Rastkörpers aus der Freigabestellung beim Einstecken in die Steckaufnahme, so dass der mindestens eine Rastkörper in die Raststellung beweglich ist, um den Kupplungsarm am Halter zu verrasten.

Nachfolgend werden Ausführungsbeispiele der Erfindung anhand der Zeichnung erläutert. Es zeigen:

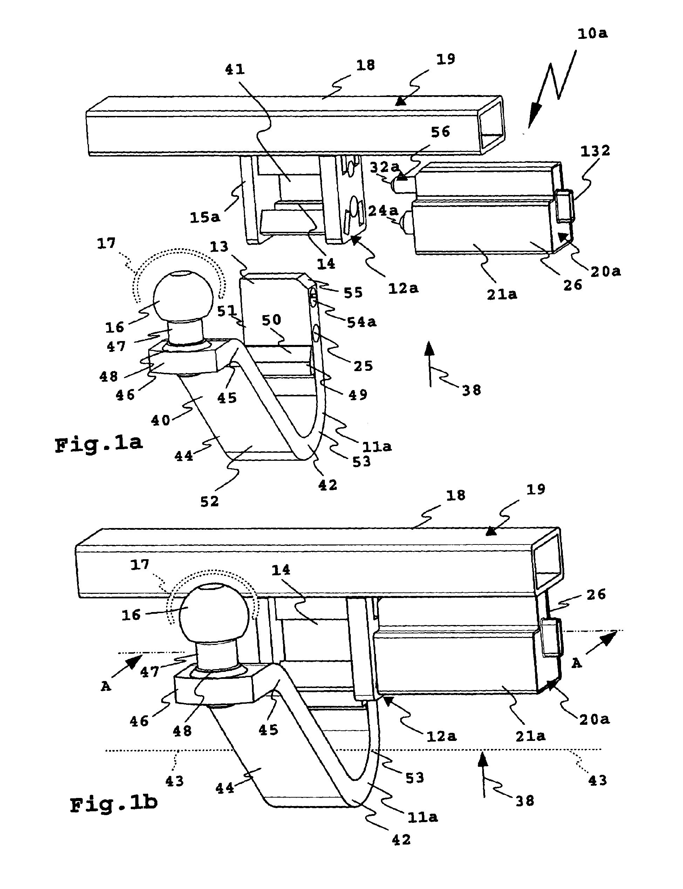

- Figur 1a: eine Explosionsdarstellung einer
- Figur 1b: im zusammengebauten Zustand schräg von vorn dargestellten ersten Ausführungsform einer er- findungsgemäßen Anhängkupplung,

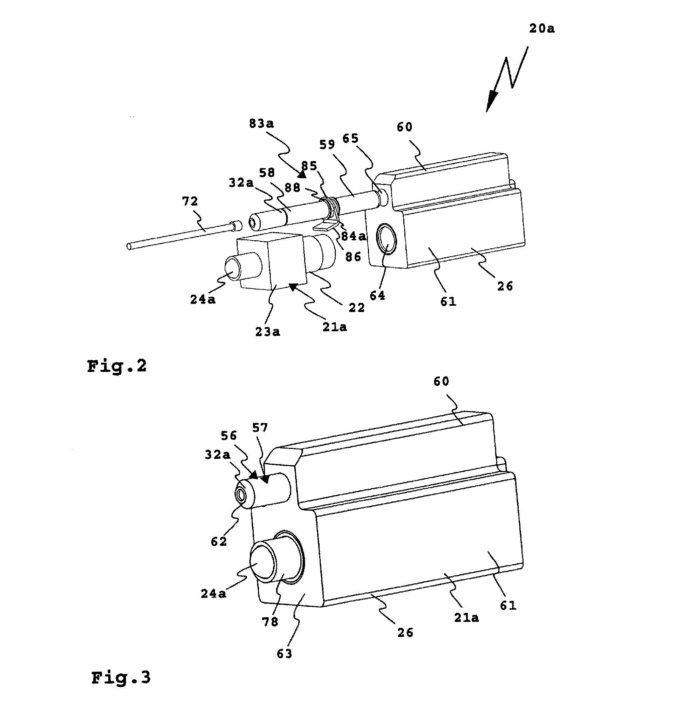

- Figur 2: eine Explosionsdarstellung einer in
- Figur 3: zusammengebaut dargestellten Verriegelungsein- richtung der Anhängekupplung gemäß Figuren 1a, 1b,

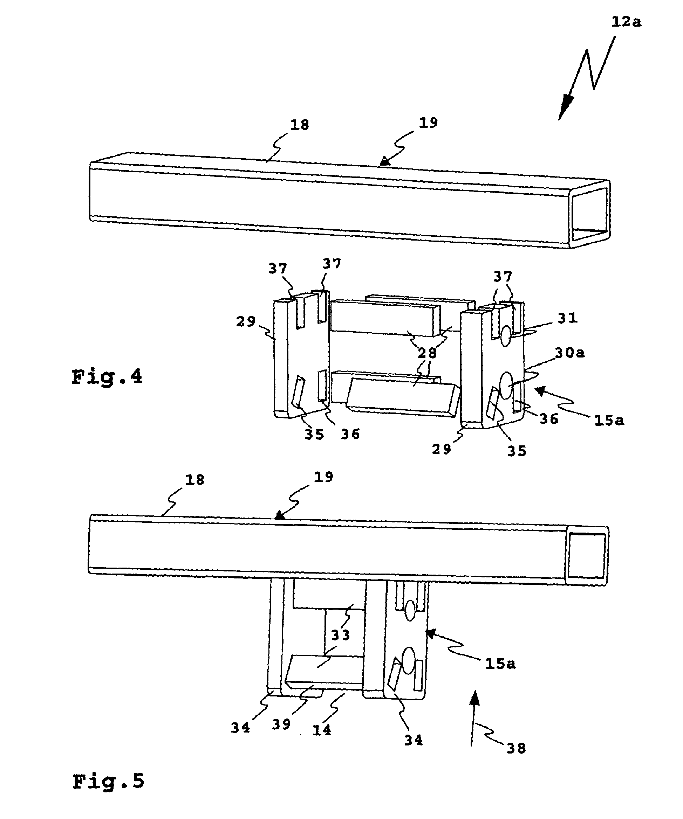

- Figur 4: eine Explosionsdarstellung eines Haltergehäuses der Anhängekupplung gemäß Figur 1a, das in
- Figur 5: zusammengebaut dargestellt ist,
- Figur 6a: eine Schnittdarstellung der Anhängekupplung gemäß Figur 1b, etwa entlang einer Schnittlinie A-A in Figur 1b beim Einstecken eines Kupplungs- arms in das Haltergehäuse der Anhängekupplung,
- Figur 6b: die Ansicht gemäß Figur 6a, wobei ein als Siche- rungskörper ausgestalteter Rastkörper in eine Rastausnehmung am Kupplungsarm eingerastet ist,
- Figur 6c: eine teilweise und
- Figur 6d: eine vollständig durchgeführte motorische Ver- riegelung des Kupplungsarms,
- Fig. 6e, 6f: die Ansicht gemäß Figur 6a mit teilweise und vollständig entriegelter Verriegelungseinrich- tung,
- Figur 6g: die Verriegelungseinrichtung gemäß Figur 6f, wobei der Rastkörper oder Sperrkörper, der in Figur 6b in den Kupplungsarm einrastet, für eine Wiederverrastung freigegeben ist,
- Figur 7: eine perspektivische Schrägansicht der Anhänge- kupplung gemäß Fig. 1b, jedoch mit einer zusätz- lichen Anhänger-Steckdose mit geöffnetem Deckel, wobei die Steckdose bei einem Vergrößerungsaus- schnitt B mit ihrem Deckel verschlossen ist,
- Figur 8: eine Variante der Anhängekupplung gemäß Figur 1a mit einem zusätzlichen Formschlusselement- Sensor,
- Fig. 9a-9c: eine Vertikal-Querschnittsansicht der Anhänge- kupplung gemäß Figur 8, wobei ein Verriegelungs- vorgang des Kupplungsarms am Halter gezeigt ist,
- Fig. 9d-9f: Ansichten entsprechend Figuren 9a-9c zur Veran- schaulichung eines Entriegelungsvorgangs,

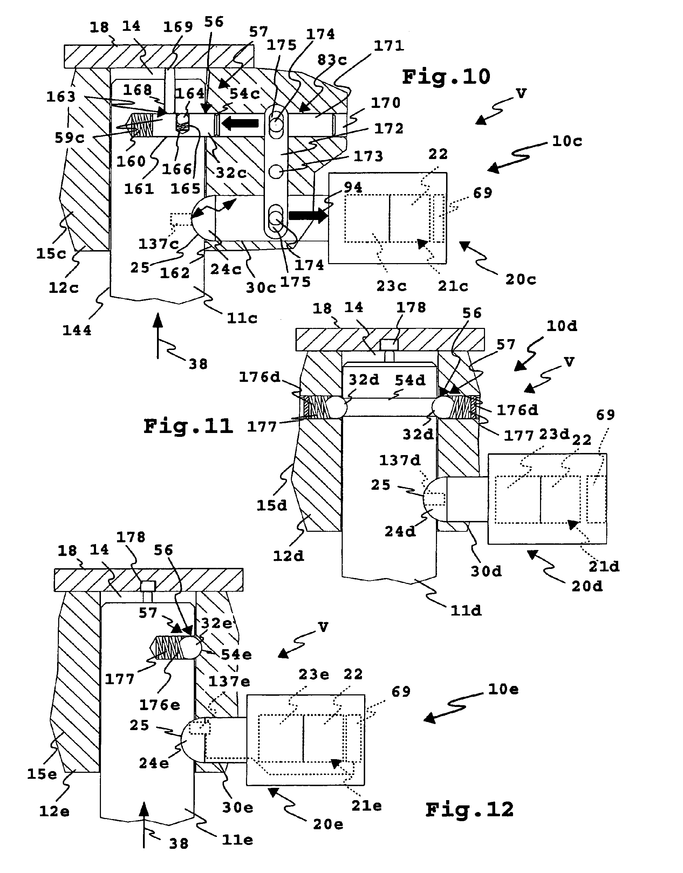

- Figur 10: eine teilweise Querschnittsansicht eines weite- ren Ausführungsbeispiels einer erfindungsgemäßen Anhängekupplung mit einem im Kupplungsarm beweg- lich gelagerten Sicherungsbolzen zur Verrastung mit dem Halter,
- Figur 11: eine Querschnittsansicht eines weiteren Ausfüh- rungsbeispiels mit federbelasteten Rastmitteln zum Halten des Kupplungsarms für eine Verriege- lung durch eine motorische Verriegelungseinrich- tung mit am Halter beweglich gelagerten Rastkör- pern,
- Figur 12: eine teilweise Querschnittsansicht eines weite- ren Ausführungsbeispiels der Erfindung mit einem am Kupplungsarm beweglich gelagerten Rastkörper zum Verrasten und Halten an einem Halter,

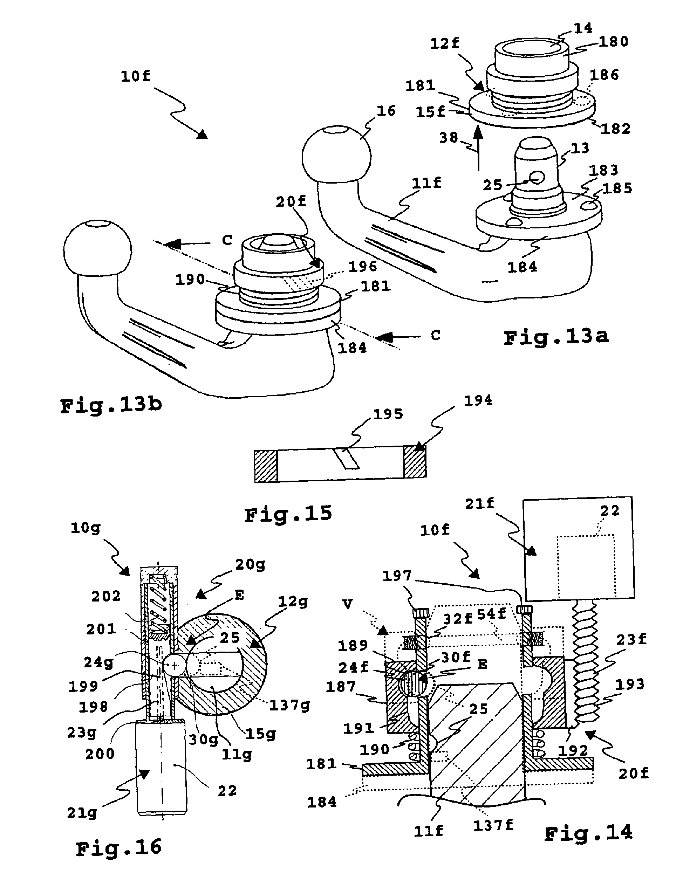

- Figur 13a: ein weiteres Ausführungsbeispiel einer erfin- dungsgemäßen, sehr kompakten Anhängekupplung, wobei ein Kupplungsarm vom Halter entfernt ist,
- Figur 13b: die Anhängekupplung gemäß Figur 13a mit am Halter angeordnetem Kupplungsarm,
- Figur 14: eine teilweise Querschnittsansicht der Anhänge- kupplung gemäß Figur 13b, etwa entlang einer Schnittlinie C-C,
- Figur 15: einen Betätigungsring zur alternativen Verwen- dung an der Anhängekupplung gemäß Figur 13a, 13b,
- Figur 16: ein weiteres Verriegelungsprinzip einer erfin- dungsgemäßen Anhängekupplung mit einem Keil- schrägen-Verschiebekörper,

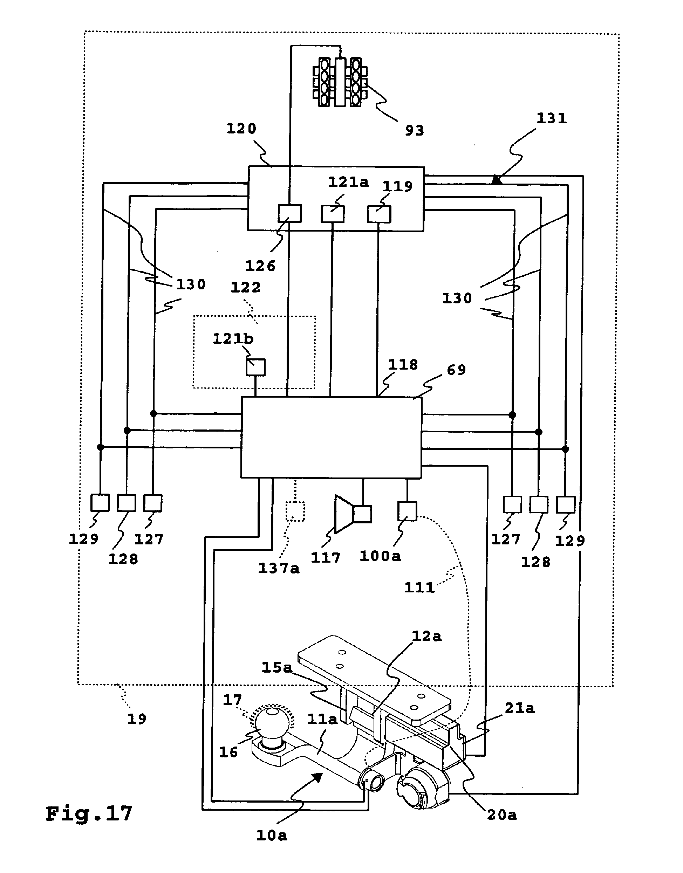

- Figur 17: ein schematisches Schaltbild der Anhängekupplung gemäß Figuren 1a, 1b sowie deren Steuerung und eines Bordnetzes des Zugfahrzeugs,

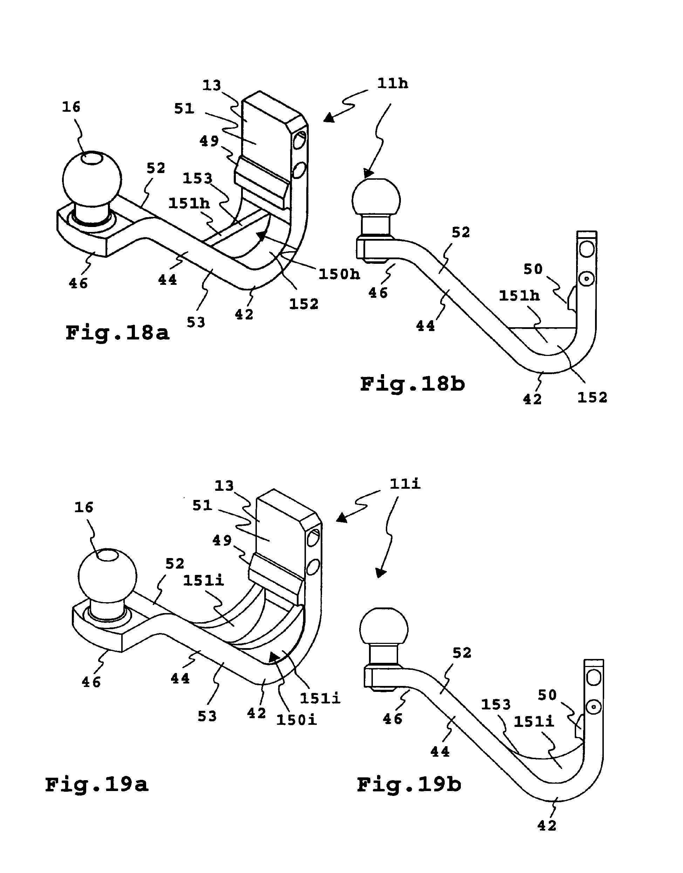

- Fig. 18a,18b: einen mit einer innenliegenden Verstärkungsrippe verstärkten Kupplungsarm,
- Fig. 19a,19b: einen mit zwei innenliegenden Verstärkungsrippen verstärkten Kupplungsarm,

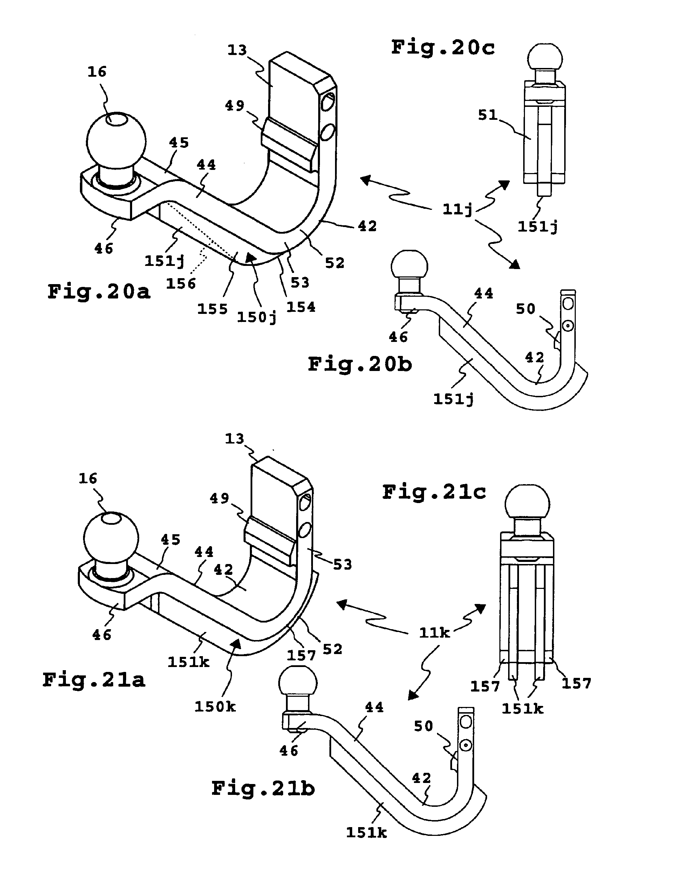

- Fig. 20a-20c: einen mit einer außenliegenden Verstärkungsrippe verstärkten Kupplungsarm,
- Fig. 21a-21c: einen mit zwei außenliegenden Verstärkungsrippen verstärkten Kupplungsarm,

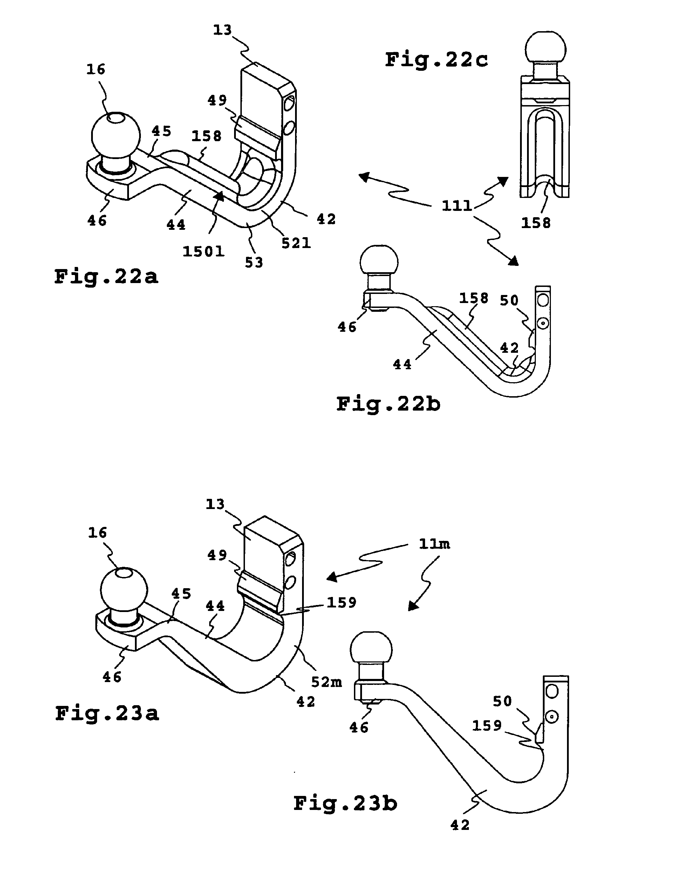

- Fig. 22a-22c: einen mit einer Auswölbung verstärkten Kupp- lungsarm, und
- Fig. 23a,23b: einen Kupplungsarm mit entlang seiner Längser- streckungsrichtung variiertem Querschnitt.

Bei der nachfolgenden Beschreibung sind ähnliche oder gleichwirkende Komponenten mit denselben Bezugsziffern versehen, wobei zur Verdeutlichung von Unterschieden Kleinbuchstaben a, b etc. verwendet sind.

Bei Anhängekupplungen 10a-10g ist jeweils ein Kupplungsarm 11a-11g an einem Halter 12a-12g lösbar befestigbar. Die Kupplungsarme 11a-11g sind mit ihren Steckenden 13 in Steckaufnahmen 14 von Haltergehäusen 15a-15g der Halter 12a-12g einsteckbar. An dem dem Steckende 13 entgegengesetzten Längsende der Kupplungsarme 11a-11g ist ein Kugelkopf 16 zum Anhängen eines schematisch dargestellten Anhängers 17 angeordnet. Die Halter 12a-12g sind an einem Querträger 18 eines Kraftfahrzeuges 19 befestigbar. Beispielsweise sind die Halter 12a-12g an den Querträger 18 angeschraubt, angeschweißt oder dergleichen. Es versteht sich, dass zum Halten der Halter 12a-12g auch sonstige Trägeranordnungen oder Bereiche des Kraftfahrzeuges 19 vorgesehen sein könnten, beispielsweise Karosserieteile oder dergleichen.

Die Kupplungsarme 11a-11g sind an Haltern 12a-12g mittels Verriegelungseinrichtungen 20a-20g motorisch verriegelbar.

Dadurch ist die Handhabung der Anhängekupplungen 10a-10g besonders einfach. Der Bediener benötigt keinerlei Handbedienelemente, beispielsweise Handräder oder dergleichen, um die Verriegelung der Anhängekupplungen 10a-10g zu betätigen. Handbedienelemente sind bei manuellen Anhängekupplungen mit abnehmbarem Kupplungsarm in der Regel im Außenbereich angeordnet, wo sie beim Fahrbetrieb verschmutzen.

Verriegelungsantriebe 21a-21g mit jeweils einem Verriegelungsmotor 22 und einem Spanngetriebe 23a-23g sind zur Betätigung von Formschlusselementen 24a-24g zwischen einer den Kupplungsarm 11a-11g am Halter 12a-12g verriegelnden Verriegelungsstellung V und einer den Kupplungsarm 11a-11g zum Entnehmen vom Halter 12a-12g freigebenden Entriegelungsstellung E vorgesehen.

Die Formschlusselemente 24a, 24b, 24f, 24g sind beispielsweise Kugeln, während die Formschlusselemente 24c, 24d, 24e Sperrbolzen sind, deren freies, zur Verriegelung vorgesehenes Ende zweckmäßigerweise kugelig ist.

Es sind als Formschlusselemente aber auch Sperrbolzen oder Verriegelungsbolzen möglich, deren freie Enden rund, flach gekrümmt, plan oder dergleichen sind. Vorzugsweise zwischen ist einer Stirnseite eines jeweiligen Bolzens und dessen Außenumfang eine Einführschräge vorgesehen. Es versteht sich, dass als Formschlusselemente auch Wälzkörper, zum Beispiel Rollen oder dergleichen, ohne weiteres möglich sind.

Die Verriegelungsmotoren 22 sind vorliegend Elektromotoren, wobei ohne weiteres auch pneumatische Antriebe, hydraulische Antriebe, elektro-pneumatische Hybridantriebe oder dergleichen möglich sind.

Die Spanngetriebe 23a-23g sind zweckmäßigerweise selbsthemmend, so dass die Anhängekupplungen 10a-10g in der Entriegelungsstellung E oder der Verriegelungsstellung V bleiben, auch wenn der Verriegelungsmotor 22 unbetätigt ist.

Vorzugsweise sind die Spanngetriebe 23a-23g zu einer Kraftverstärkung des Verriegelungsmotors 22 vorgesehen. So sind beispielsweise die Spanngetriebe 23a-23e Getriebe, die eine Drehzahl des Verriegelungsmotors 22 herabsetzen.

Das Spanngetriebe 23a umfasst z.B. ein Planetengetriebe. Das Spanngetriebe 23f umfasst ein Schneckengetriebe, das Spanngetriebe 23g ein Spindel-Mutter-Getriebe. Die Spindel des Spanngetriebes 23a hat ebenso wie die schematisch dargestellte Schnecke des Spanngetriebes 23f zweckmäßigerweise eine zur Selbsthemmung geeignete Steigung.

Hier sei erwähnt, dass bei jedem Spanngetriebe einer erfindungsgemäßen Anhängekupplung eine Selbsthemmung vorteilhaft ist. Ferner kann ein Spanngetriebe einer erfindungsgemäßen Anhängekupplung andere Getriebearten umfassen, z.B. ein Zahnradgetriebe, Spindelgetriebe, ein Schneckengetriebe, ein Keilgetriebe, ein Planetengetriebe, auch in beliebiger Kombination mindestens zweier gleicher oder unterschiedlicher Getriebe miteinander.

Die Formschlusselemente 24a-24g greifen in Formschlusskonturen 25 in den Kupplungsarmen 11a-11g ein. Die Formschlusskonturen 25 sind an dem Steckende 13 des Kupplungsarms 11a-11g angeordnet.

Hier sei erwähnt, dass ein Formschlusselement einer erfindungsgemäßen Anhängekupplung auch eine Formschlussaufnahme umfassen kann, die mit einem ortfesten, eine Formschlusskontur darstellenden Formschlussvorsprung in Formschluss bringbar ist. Ferner kann das mindestens eine, durch die Verriegelungseinrichtung betätigbare Formschlusselement bei einer Anhängekupplung auch am Kupplungsarm und die Formschlusskontur ortsfest am Halter sein.

Beim Halter 12a ist ein modulares Konzept realisiert. Ein Antriebsgehäuse 26 der Verriegelungseinrichtung 20a enthält den Verriegelungsantrieb 21a einschließlich des Verriegelungsmotors 22 und des Spanngetriebes 23a. Somit ist die Verriegelungseinrichtung 20a als ein Verriegelungsmodul oder Antriebsmodul ausgestaltet. Das Verriegelungsmodul kann vormontiert an das Haltergehäuse 15a angesetzt werden, was die Montage vereinfacht. Beispielsweise sind das Antriebsgehäuse 26 und das Haltergehäuse 15a miteinander verschraubt (nicht dargestellt), aneinander angeklebt oder dergleichen. Die Verbindung zwischen dem Antriebsgehäuse 26 und dem Haltergehäuse 15a kann aber auch beispielsweise durch den Querträger 18 realisiert sein, an dem beide Komponenten befestigt sind, beispielsweise angeschraubt, angeschweißt oder dergleichen.

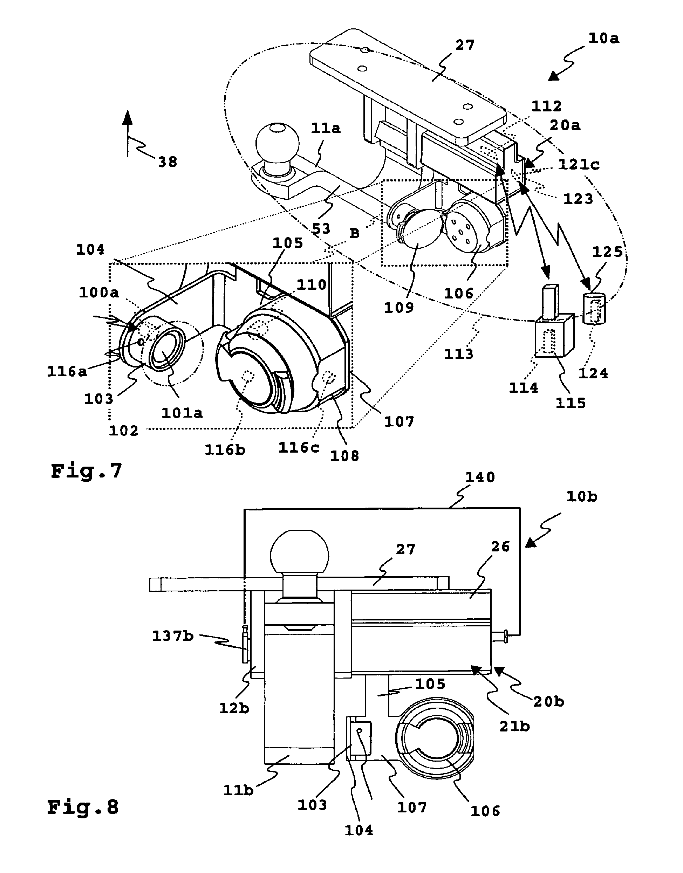

Es kann auch ein gemeinsamer Träger für das Antriebsgehäuse 26 und das Haltergehäuse 15a vorgesehen sein, beispielsweise eine Trägerplatte 27 (Figur 8), an der die beiden Komponenten angeordnet sind. Es ist beispielsweise möglich, das Haltergehäuse 15a an die Trägerplatte 27 anzuschweißen und das Antriebsgehäuse 26 sodann seitlich an dem Haltergehäuse 15a zu befestigen, beispielsweise anzuschrauben.

Die mit einem gemeinsamen Träger, zum Beispiel der Trägerplatte 27, miteinander verbundenen Bestandteile des Halters 12a (Antriebsgehäuse 26 und Haltergehäuse 15a) können als kompakte Baueinheit beispielsweise am Querträger 18 befestigt werden, zum Beispiel angeschraubt werden. Somit bildet der Halter 12a bei dieser Ausgestaltung ein kompaktes Haltermodul, das als Ganzes montierbar ist.

Bei der Herstellung des Haltergehäuses 15a ist ein innovatives Konzept realisiert, das die Fertigungskosten bei hoher mechanischer Belastbarkeit des Haltergehäuses 15a niedrig hält.

Das Haltergehäuse 15a ist aus Plattenstücken 28, 29 gefertigt, die aus Flachmaterial ausgeschnitten sind, beispielsweise ausgestanzt, mittels Laser, Plasma oder Wasserstrahl, der zweckmäßigerweise ein Abrasivmaterial (zum Beispiel Sand) enthält, durch Brennschneiden oder dergleichen.

Die Plattenstücke 28 haben ein und dieselbe geometrische Gestalt, so dass ein Gleichteilprinzip realisiert ist. Die Plattenstücke 29 sind ebenfalls im Wesentlichen gleich und haben dieselbe Geometrie, abgesehen von einem Führungskanal 30a für das Formschlusselement 24a und einem oberen Führungskanal 31 für einen Rastkörper 32a der Verriegelungseinrichtung 20a.

Die Plattenstücke 28 bilden Querstreben 33, die sich zwischen von den Plattenstücken 29 gebildeten Seitenwänden 34a, 34b erstrecken, von denen wie gesagt die dem Antriebsgehäuse 26 zugewandte Seitenwand 34 die Führungskanäle 30a, 31 aufweist.

Die Querstreben 33 sind in Aufnahmen 35, 36 und 37 an den Seitenwänden 34 aufgenommen. Die Aufnahmen 35-37 sind vorliegend als Durchgangsöffnungen ausgestaltet, das heißt, sie sind beim Ausstanzen oder sonstigen Ausschneiden der Plattenstücke 28, 29 zweckmäßigerweise in einem Arbeitsgang mithergestellt. Dadurch gestaltet sich die Herstellung der Plattenstücke 28 und 29 besonders einfach. Zudem durchdringen die Querstreben 33 die Aufnahmen 35-37 im Wesentlichen vollständig, so dass ein sicherer Halt zwischen den Querstreben 33 und den Seitenwänden 34 gegeben ist. Die oberen Aufnahmen 37 sind nach oben hin offen.

Die in den Aufnahmen 35-37 steckenden Querstreben 33 werden nach einem einfachen Steckvorgang oder Einpressvorgang, der ohne weiteres auch maschinell realisierbar ist, mit den Seitenwänden 34 fest verbunden, beispielsweise verschweißt, verklebt oder dergleichen.

Die Querstreben 33 und die Seitenwände 34 verlaufen winkelig, vorliegend rechtwinkelig zueinander, so dass die Steckaufnahme 24 eine polygonale, vorliegend rechteckige Innenquerschnittskontur quer zu einer Einsteckrichtung 38 des Kupplungsarms 11a in die Steckaufnahme 14 aufweist.

Die beiden unteren Aufnahmen 35 sind bezüglich der Einsteckrichtung 38 schräggeneigt. Dadurch hat auch die in die Aufnahmen 35 eingesteckte Querstrebe 33 eine Schrägneigung.

Die in die Aufnahmen 35 eingesteckte Querstrebe 33 bildet einen Steckanschlag 39 für einen Gegenanschlag am Kupplungsarm. Zudem erleichtert die Schrägneigung der unteren Querstrebe 33 ein Einstecken des Kupplungsarms 11. Somit bildet der schräggeneigte Steckanschlag 39 zugleich eine Einführschräge.

Die Querstreben 33 sind bezüglich der Einsteckrichtung 38 zueinander beabstandet. Dadurch wird eine Art Käfigstruktur gebildet. Mithin ist das Haltergehäuse 15a ein Halterkäfig. Das Haltergehäuse 15a ist leicht und materialsparend aufgebaut.

Die die Steckaufnahme 14 definierenden Innenseiten der Seitenwände 34 sowie der Querstreben 33 sind Flachseiten, an denen das Steckende 13 des Kupplungsarms 11a flächig anliegt. Durch die zusätzliche Verriegelung und Verspannung mittels der Verriegelungseinrichtung 20a in Verbindung mit der großflächigen Anlage ist der Kupplungsarm 11a in der Steckaufnahme 14 spielfrei aufgenommen. Zudem bildet die polygonale Innenquerschnittskontur mit der korrespondierenden Außenquerschnittskontur der Steckaufnahme 14 in Verbindung mit der korrespondierenden, ebenfalls polygonalen Außenquerschnittskontur des Steckendes 13 des Kupplungsarms 11a eine optimale Verdrehsicherung.

Auch der Kupplungsarm 11a ist mit geringem, jedoch effizient genutztem Materialeinsatz hergestellt.

Anders als übliche Kupplungsarme weist der Kupplungsarm 11a eine Flachgestalt auf und ist vorzugsweise aus demselben Flachmaterial gefertigt wie die Plattenstücke 28, 29 des Haltergehäuses 15a. Der Kupplungsarm 11a hat zwischen seinen beiden Längsenden, das heißt über seine gesamte Länge, einen polygonalen Außenquerschnitt 40, der vorliegend flach-rechteckig ist. Insbesondere hat das Steckende 13 diese polygonale Außenquerschnittskontur bzw. den Außenquerschnitt 40, der mit der entsprechenden Innenquerschnittskontur 41 der Steckaufnahme 14 korrespondiert.

Durch die polygonalen Querschnittskonturen ist der Kupplungsarm 11a verdrehsicher in der Steckaufnahme 14 aufgenommen.

Die Steckaufnahme 14 ist im am Kraftfahrzeug 19 montierten Zustand nach unten offen. Mithin verläuft also die Einsteckrichtung 38 vertikal. Dementsprechend verläuft auch das Steckende 13 vertikal, wenn es in die Steckaufnahme 14 eingesteckt ist.

Unterhalb des geradlinig verlaufenden Steckendes 13 des Kupplungsarms 11a erstreckt sich ein Krümmungsabschnitt 42, der im am Kraftfahrzeug 19 montierten Zustand des Kupplungsarms 11a um eine Unterkante eines Stoßfängers 43 des Kraftfahrzeuges 19 herum verläuft.

An den Krümmungsabschnitt 42, der eine erste Krümmung des Kupplungsarms 11a darstellt und beim Ausführungsbeispiel einen Winkel von etwa 135° aufweist (größere oder kleinere Winkel sind bei anderen geometrischen Anforderungen des Kraftfahrzeugs auch möglich), schließt sich ein im Wesentlichen geradliniger, vorliegend sogar exakt geradliniger Armabschnitt 44 des Kupplungsarms 11a an. Der Armabschnitt 44 verläuft beispielsweise mit einer Schrägneigung von etwa 45° zur Horizontalen, wobei auch hier größere oder kleinere Winkel bei anderen geometrischen Anforderungen des Kraftfahrzeugs auch möglich sind. Der Armabschnitt 44 erstreckt sich zwischen dem unteren Krümmungsabschnitt 42 sowie einem oberen Krümmungsabschnitt 45. Der Krümmungsabschnitt 45 hat eine Krümmung von etwa 45°. Der Krümmungsabschnitt 45 ist zwischen dem geradlinigen Armabschnitt 44 sowie einem Kugelkopfende 46 angeordnet, an dem der Kugelkopf 16 angeordnet ist.

Das Kugelkopfende 46 bildet ein dem Steckende 13 entgegengesetztes Längsende des Kupplungsarms 11a. Das Kugelkopfende 46 verläuft bei Gebrauch des Kupplungsarms 11a im Wesentlichen horizontal. Das Kugelkopfende 46 und das Steckende 13 sind zueinander etwa rechtwinkelig.

Der Kugelkopf 16 ist auf einem Kugelkopfträger 47 angeordnet. Der Kugelkopfträger 47 hat eine im Wesentlichen zylindrische Gestalt. Der Kugelkopfträger 47 durchdringt eine Aufnahme am Kugelkopfende 46. Der Kugelkopfträger 47 ist mit dem Kugelkopfende 46 beispielsweise verschraubt, verschweißt oder dergleichen fest verbunden. Vor einen Außenumfang des Kugelkopfträgers 47 steht ein Stützflansch 48 vor, mit dem sich der Kugelkopfträger 47 auf der Oberseite des Kugelkopfendes 46 abstützt.

An einem unteren Endbereich des Steckendes 13 ist ein Steckanschlagkörper 49 angeordnet, der am korrespondierenden Steckanschlag 39 des Haltergehäuses 15a beim Einstecken des Kupplungsarms 11a in die Steckaufnahme 14 anschlägt. Der Steckanschlagkörper 49 hat eine zum freien Ende des Steckendes 13 hin schräg verlaufende Keilschräge 50 zum Verkeilen in der Steckaufnahme 14.

Der Steckanschlagkörper 49 ist auf einer Querbreitseite 51 eines Armkörpers 52 des Kupplungsarms 11a angeordnet. Die Formschlusskontur 25 hingegen ist an einer Querschmalseite 53 des Armkörpers 52 angeordnet. Neben der Formschlusskontur 25, die als Aufnahme ausgestaltet ist, ist eine ebenfalls als Aufnahme ausgestaltete Rastkontur 54a für den Rastkörper 32a angeordnet.

Neben der Rastkontur 54a verläuft eine Verdrängerschräge 55 für den Rastkörper 32a. Der Rastkörper 32a gleitet an der Verdrängerschräge 55 beim Einstecken des Steckendes 13 in die Steckaufnahme 14 entlang bis zur Querschmalseite 53, um anschließend in die Rastkontur 54a einzurasten.

Die Querschmalseiten 53 bilden bei Gebrauch des Kupplungsarms 11a vertikale Seiten beziehungsweise zur Fahrzeughochachse parallel verlaufende Seiten, während die Querbreitseite 51 sowie eine entgegengesetzt am Armkörper 52 angeordnete weitere Querbreitseite parallel zur Fahrzeug-Querrichtung des Kraftfahrzeugs 19 verlaufen. Somit hat der Kupplungsarm 11a insbesondere in Fahrzeug-Querrichtung eine hohe mechanische Belastbarkeit. Zur Erhöhung der Vertikalbelastbarkeit und/oder der Längsbelastbarkeit und/oder Horizontalbelastbarkeit sind jedoch die nachfolgenden Maßnahmen vorteilhaft:

Der Armkörper 52 ist aus einem durchgehenden Flachmaterialstück gefertigt, in das die Krümmungsabschnitte 42 und 45 beispielsweise eingepresst sind.

Bei einem Kupplungsarm 11h ist der Armkörper 52 mit einer Verstärkungsstruktur 150h versehen, so dass seine Belastungsfähigkeit, insbesondere seine Vertikal- und Horizontal-Belastungsfähigkeit, zunimmt. Auch in horizontaler Richtung beziehungsweise Fahrzeug-Querrichtung ist der Kupplungsarm 11h höher belastbar. Die Verstärkungsstruktur 150h umfasst eine Verstärkungsrippe 151h, die in einem Innenraum 152 des unteren Krümmungsabschnitts 42 angeordnet ist. Die Verstärkungsrippe 151h ist als ein Steg ausgestaltet, der etwa in der Quermitte der oberen Querbreitseite 51 angeordnet ist. Eine Oberseite 153 des Stegs beziehungsweise der Verstärkungsrippe 151h hat einen geraden Verlauf, der bei Gebrauch des Kupplungsarms 11h im Wesentlichen horizontal ist. Mithin erstreckt sich die Verstärkungsrippe 151h im vollen Innenumfang des unteren Krümmungsabschnitts 42 und noch ein Stück weit nach oben entlang des geradlinigen Armabschnitts 44. Die Verstärkungsrippe 151h ist beispielsweise etwa 3 cm hoch und 1 cm breit. Beispielsweise ist die Verstärkungsrippe 151h in den Innenraum 152 eingeschweißt. Die Verstärkungsrippe 151h wird z.B. durch ein Blechteil gebildet.

Eine Verstärkungsstruktur 150i bei einem Kupplungsarm 11i enthält zwei Verstärkungsrippen 151i, die parallel nebeneinander verlaufen und beide im Innenraum 152, das heißt also an der Oberseite des Armkörpers 52, angeordnet sind. Die Oberseiten 153 der beiden Verstärkungsrippen 151i sind bogenförmig. Die Krümmung dieser Bögen verläuft korrespondierend zur Krümmung des Krümmungsabschnittes 42 im Innenraum 152.

Die Verstärkungsrippen 151i verlaufen parallel und mit einem Abstand zueinander. Vorzugsweise sind die Verstärkungsrippen 151i jeweils in der Nähe der Querschmalseiten 53 angeordnet, das heißt an den einander entgegengesetzten äußeren Randbereichen der Querbreitseite 51.

Es versteht sich, dass Verstärkungsrippen wie vorher erläutert an der Oberseite eines erfindungsgemäßen Kupplungsarms angeordnet sein können, wobei auch die Anbringung an einer Unterseite Vorteile hat. Beispielsweise bildet eine an der Unterseite eines Kupplungsarms angeordnete Querrippe gleichzeitig einen Schutz für den Kupplungsarm, zum Beispiel wenn das Kraftfahrzeug 19 auf dem Untergrund aufsitzt, beispielsweise im Bereich einer Böschung oder dergleichen.

Es können an der Oberseite und der Unterseite eines Kupplungsarms Verstärkungsstrukturen mit mindestens einer Verstärkungsrippe vorgesehen sein. Zueinander zumindest abschnittsweise schrägverlaufende Verstärkungsrippen und/oder sich kreuzende Verstärkungsrippen sind auch möglich.

Die nachfolgend bei Kupplungsarmen 11j und 11k vorgestellten, unterseitig angeordneten Verstärkungsrippen 151J und 151k sind zudem an der Unterseite vorteilhaft kufenförmig ausgestaltet, so dass sie gegebenenfalls auf einem Untergrund aufgleiten können.

Die Verstärkungsrippe 151j ist an der Unterseite des Armkörpers 52 des Kupplungsarms 11j angeordnet und erstreckt sich sowohl am Außenumfang des unteren Krümmungsabschnitts 42 als auch im Wesentlichen über die gesamte Länge des geradlinigen Armabschnitts 44. Die Verstärkungsrippe 151j endet im Bereich oder vor dem oberen Krümmungsabschnitt 45. Auf der anderen Seite erstreckt sich die Verstärkungsrippe 151j bis zum Steckende 13, das geradlinig verläuft. Somit verstärkt die Verstärkungsrippe 151j nahezu sämtliche Abschnitte des Armkörpers 52, die außerhalb des Haltergehäuses 15a beim Gebrauch des Kupplungsarms 11j verlaufen, abgesehen von dem Kugelkopfende 46. Die Verstärkungsrippe 151j ist zweckmäßigerweise etwa in der Quermitte der unteren Querbreitseite 51 angeordnet. Beispielsweise wird die Verstärkungsrippe 151j durch einen Steg beziehungsweise ein Blech gebildet, das an den Armkörper 52 angeschweißt ist. Eine Querhöhe 155 der Verstärkungsrippe 151j ist im Wesentlichen konstant.

Es versteht sich, dass auch variierende Querhöhen möglich sind, wobei die Querhöhe insbesondere in stark belasteten Abschnitten eines jeweiligen Kupplungsarmes groß ist, in weniger belasteten Abschnitten geringer. So könnte eine nicht schematisch dargestellte Verstärkungsrippe auch beispielsweise einen Querhöhenverlauf 156 aufweisen.

Bei einem Kupplungsarm 11k sind zwei Verstärkungsrippen 151k einer Verstärkungsstruktur 150k vorgesehen, die eine gleichartige Geometrie wie die Verstärkungsrippe 151j aufweisen, das heißt sich am Außenumfang 154 des Krümmungsabschnitt 42 und entlang des geradlinigen Armabschnitts 44 erstrecken. Die beiden Verstärkungsrippen 151k verlaufen parallel zueinander und haben einen Abstand voneinander. Die verstärkungsrippen 151k haben ferner einen Abstand 157 von den Außenrändern der unteren Querbreitseite 51.

Ein Kupplungsarm 111 hat als eine Verstärkungsstruktur 1501 eine Wölbung 158. Die Wölbung 158 wird vor dem Einbringen der Krümmungen 42, 45 in einen Rohling, der später den Armkörper 521 bildet, eingeprägt. Sodann wird der Rohling mit der bereits eingeprägten Wölbung 158 umgeformt, wobei die beiden Krümmungsabschnitte 42, 45 gebildet werden.

Die Wölbung 158 steht nach oben vor die Oberseite des Kupplungsarms 111 vor. Die Wölbung 158 erstreckt sich entlang des geradlinigen Armabschnittes 44 sowie auch im Innenraum 152 des Krümmungsabschnitts 42. Somit ist der Kupplungsarm 111 an seinen besonders stark belasteten Abschnitten durch die Wölbungsstruktur mit der Wölbung 158 verstärkt.

Im Grunde genommen ist mit der Wölbung 158 eine Struktur mit einer Belastbarkeit geschaffen, die etwa einer Verstärkungsrippe zweier unterer Verstärkungsrippen sowie einer zentralen oberen Verstärkungsrippe entspricht.

Es versteht sich, dass bei einem Kupplungsarm auch eine nach unten, das heißt zur Unterseite des Armkörpers gerichtete Wölbung zu dessen Verstärkung vorgesehen sein kann. Auch eine Kombination von Wölbungen nach unten und nach oben an einem einzigen Kupplungsarm sind möglich.

Ebenfalls im Sinne einer Verstärkung wirkt es, wenn besonders belastete Abschnitte des Kupplungsarms eine größere Querschnittsgröße aufweisen als weniger belastete Abschnitte. So hat ein Armkörper 52m des Kupplungsarms 11m im Bereich des unteren Krümmungsabschnittes 42 seine größte Querschnittsfläche oder Querschnittsgröße. Die Größe des Querschnitts nimmt im Bereich des geradlinigen Abschnittes von dem Krümmungsabschnitt 42 ausgehend kontinuierlich ab und erreicht am Ende des Abschnittes 44 etwa die Querschnittsgröße des Kugelkopfendes 46. Die Querschnittsgeometrie des Armkörpers 52m ist allerdings über die gesamte Längserstreckungsrichtung des Kupplungsarms 11m gleichbleibend, nämlich vorliegend rechtekkig, insbesondere flach-rechteckig.

Unterhalb des Steckendes 13 ist ein podestartiger Vorsprung 159 zum Tragen des Steckanschlagkörpers 49 an dem Armkörper 52m angeformt.

Ferner ist es möglich, eine Anfräsung oder einen An- oder Ausschnitt (z.B. mit einer anhand des Halters 15a erläuterten Schneidmethoden) unterhalb eines Steckendes und/oder an einem Steckende, z.B. entlang einer Teillänge eines Steckendes oder auch über die vollständige Länge eines Steckendes, gegebenenfalls auch jeweils bis zu dessen freiem Ende hin, zur Ausbildung einer Einführschräge und/oder einer Keilschräge und/oder eines Steckanschlags vorzusehen.

Die anhand der Kupplungsarme 11h-11m exemplarisch vorgestellten Verstärkungen sind auch in beliebiger Kombination miteinander, besonders vorteilhaft bei Armkörpern mit einem flachen Querschnitt, einsetzbar. Ferner kann man derartige Kupplungsarme auch beweglich an einem Halter lagern, d.h. bei Anhängekupplungen mit schwenk- und/oder schiebebeweglichem Kupplungsarm einsetzen. Ein Einsatz bei manuell verriegelbaren Anhängekupplungen ist auch möglich.

Die Anhängekupplung 10a ist bequem handhabbar, da Haltemittel 56 den Kupplungsarm 11a nach seinem Einstecken in die Steckaufnahme 14 halten, bis die Verriegelungseinrichtung 20a den Kupplungsarm 11a motorisch verriegelt und zweckmäßigerweise verspannt.

Ein Halten eines Kupplungsarms durch Haltemittel zur anschließenden motorischen Verriegelung und/oder Verspannung ist in der Handhabung bequem und erhöht die Bediensicherheit.

Die Haltemittel 56 umfassen Rastmittel 57 zum Verrasten des Kupplungsarms 11a am Halter 12a bei seinem Einstecken in die Steckaufnahme 14. Die Rastmittel 57 umfassen den Rastkörper 32a, der in die als Rastaufnahme ausgestaltete Rastkontur 54a, vorliegend eine Kugelkalotte, einrastet.

Der Rastkörper 32a ist vorteilhaft als ein Sicherungskörper 58 ausgestaltet. Der Sicherungskörper 58 wird durch einen Sicherungsbolzen 59 gebildet, der linear beweglich im Antriebsgehäuse 26 gelagert ist. Der Sicherungsbolzen 59 bildet ein zusätzliches Verriegelungselement, das den Kupplungsarm redundant zu der motorischen Verriegelung mittels des Formschlusselements 24a in der Steckaufnahme 14 sichert. Bei Ausfall der motorischen Verriegelung ist der Kupplungsarm 11a sicher am Halter 12a verriegelt. Die Sicherung mittels des Sicherungsbolzens 59, das heißt die redundante Verriegelung des Kupplungsarms 11a, ist jedoch vorzugsweise nicht spielfrei, so dass ein Bediener durch Vibrationsgeräusche des Kupplungsarms 11a beim Fahrbetrieb des Kraftfahrzeugs 19 eine nicht ganz einwandfreie Verriegelung erkennen kann.

Der Sicherungsbolzen 59 ist in einem oberen Bereich 60 des Antriebsgehäuses 26 linear beweglich gelagert. In einem darunter liegenden unteren Bereich 61 sind parallel zum Sicherungsbolzen 59 der Verriegelungsmotor 22 und das Spanngetriebe 23a ebenfalls linear beweglich in dem Antriebsgehäuse 26 aufgenommen. Im den Kupplungsarm 11a verriegelnden Zustand stehen das Formschlusselement 24a sowie ein vorderes Ende 62 des Sicherungsbolzens 59 vor eine Stirnwand 63 des Antriebsgehäuses 26 vor. Die Stirnwand 63 liegt im montierten Zustand des Halters 12a flächig an der ihr zugewandten Seitenwand 34 an. Dann fluchten die Führungskanäle 30a, 31 mit Durchtrittsöffnungen 64, 65 der Stirnwand 63 für das Formschlusselement 24a und den Rastkörper 32a. Die Durchtrittsöffnungen 64, 65 sind zweckmäßigerweise als Führungskanäle zur Führung des Formschlusselements 24a und des Rastkörpers 32a ausgestaltet, so dass diese beiden linear beweglichen Komponenten sowohl im Antriebsgehäuse 26 als auch im Haltergehäuse 15a geführt sind.

Beim Einstecken des Kupplungsarms 11a in die Steckaufnahme 14 läuft nun folgende Verriegelungssequenz ab:

Zunächst gleitet das vordere Ende 62 des Rastkörpers 32a, der einen Rastvorsprung bildet, an der Verdrängerschräge 55 entlang, so dass der Rastkörper 32a vom Kupplungsarm 11a weg in Richtung des Antriebsgehäuses 26 verdrängt wird bis zu einer Stellung, in der das freie Ende 62 nicht mehr in einen Einsteckweg des Kupplungsarms 12a vor die Innenkontur der Steckaufnahme 14 vorsteht.

Der Rastkörper 32a ist vorteilhaft federbelastet, so dass er beim vorgenannten Verschieben entgegen der Federkraft einer Feder 66 verstellt wird, die sich an einer Wand 67 eines Steuerungsgehäuses 68 im Innenraum des Antriebsgehäuses 26 abstützt. Die Wand 67 ist der Stirnwand 63 entgegengesetzt. Der Sicherungsbolzen 59 durchdringt die Feder 66, die eine Federanordnung bildet. Das Steuerungsgehäuse 68 kapselt eine Steuerung 69 und schützt diese so vor Umwelteinflüssen.

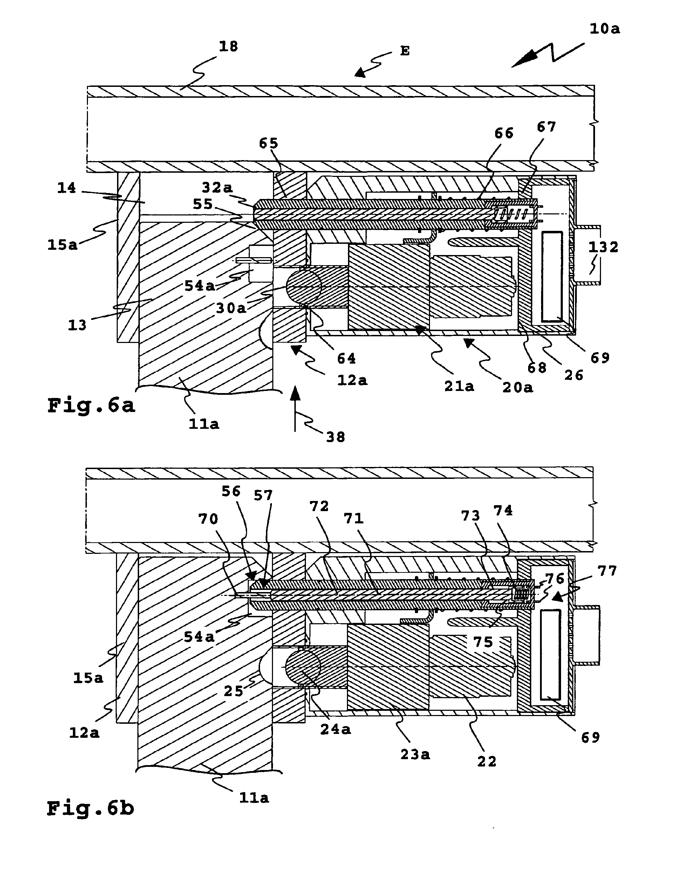

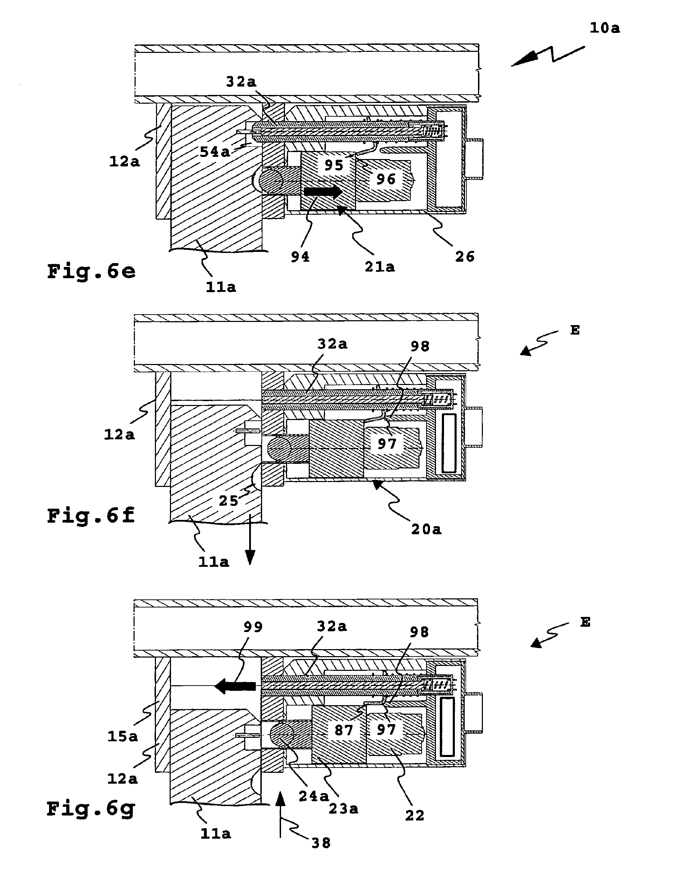

Wenn der Kupplungsarm 11a vollständig in die Steckaufnahme 14 eingesteckt ist (Figur 6b), rastet der Rastkörper 32a / der Sicherungsbolzen 59 in die Rastaufnahme oder Rastkontur 54a, so dass der Kupplungsarm 11a am Halter 12a unverlierbar verrastet ist. Somit ist bereits eine erste Verriegelungsstufe realisiert, ohne dass ein Bedienereingriff nötig ist.

Bei einem einen Kupplungsarm redundant zur motorischen Verriegelung am Halter sichernden Sicherungskörper und der zugeordneten Sicherungsaufnahme ist vorteilhaft, wenn Stützflächen quer zur Einsteckrichtung vorgesehen sind, beim dem Sicherungsbolzen 59 z.B. dessen Außenumfang, der an einem Innenumfang der Rastaufnahme 54a anschlägt.

Im Innern der als Rastaufnahme ausgestalteten Rastkontur 54a ist ein Betätigungsvorsprung 70 angeordnet, beispielsweise ein vor die Rastkontur 54a vorstehender Stift. Der Betätigungsvorsprung 70 betätigt ein Betätigungselement 71, das am Rastkörper 32a beweglich gelagert ist. Das Betätigungselement 71 wird beispielsweise durch einen Taststößel 72 gebildet, der in einer sich in Längserstreckungsrichtung des Sicherungsbolzens 59 erstreckenden Längsbohrung linear beweglich aufgenommen ist.

Der Vorteil eines Betätigungsvorsprungs in einer Rastaufnahme ist, dass am oder neben dem Rastkörper beweglich gelagerte Betätigungselement zum Schalten eines Verriegelungsantriebs nur dann betätigbar ist, wenn der Rastkörper in die Rastaufnahme einrastet.

Das Betätigungselement 71 ist durch eine Feder 73 federbelastet, die in einer Federkammer 74 im hinteren Bereich des Sicherungsbolzens 59 angeordnet ist. Die Feder 73 spannt den Taststößel 72 derart vor, dass sein freies, durch den Betätigungsvorsprung 70 betätigbares Ende nicht vor eine Stirnseite des Sicherungsbolzens 59 vorsteht, zweckmäßigerweise mit dieser Stirnseite fluchtet. Dazu sind Anschlagflächen 75 an einem hinteren Ende des Taststößels 72 vorgesehen, die bei der zum vorderen Ende 62 hin gerichteten Bewegung des Taststößels 72 an einer Innenwand der Federkammer 74 anschlagen.

Wenn das Betätigungselement 71 hingegen betätigt ist, schließt es elektrische Kontakte 76 eines elektrischen Schalters 77, der mit der Steuerung 69 verbunden ist.

Die Steuerung 69 schaltet daraufhin den Verriegelungsmotor 22 zu einer Verstellbewegung aus seiner in Figur 6b noch vorhandenen Entriegelungsstellung E in Richtung der Verriegelungsstellung V ein.

Der Verriegelungsmotor 22 treibt dann das Spanngetriebe 23a, das vorliegend ein Planetengetriebe ist, wobei auch andere Getriebearten ohne weiteres möglich sind, zu einer rotatorischen Bewegung an. Das Spanngetriebe 23a betätigt abtriebsseitig einen Formschlusselement-Träger 78a. Vorliegend treibt das Spanngetriebe 23a den Formschlusselement-Träger 78, an dessen vorderem, freiem Ende das Formschlusselement 24a angeordnet ist, rotatorisch an. Der Formschlusselement-Träger 78 ist vorliegend etwa zylindrisch und nimmt an seiner Vorderseite das als Kugel ausgestaltete Formschlusselement 24a auf. An einem Außenumfang des Formschlusselement-Trägers 78 ist ein Schraubgewinde 79 angeordnet, mit dem der Formschlusselement-Träger 78 in ein Schraubgewinde 80 einschraubbar ist, das sich in dem Führungskanal 30a und/oder der Durchtrittsöffnung 64 erstreckt. Wenn sich das Schraubgewinde 80 sowohl im Führungskanal 30a als auch in der Durchtrittsöffnung 64 erstreckt, ist dadurch ein besonders fester Halt möglich. Wenn das Schraubgewinde 80 nur in der Durchtrittsöffnung 64 verläuft, ist die Montage der Verriegelungseinrichtung 20a am Haltergehäuse 15a besonders einfach, da der Formschlusselement-Träger 78 lediglich in die Durchtrittsöffnung 64 eingesteckt wird.

Man könnte auch sagen, dass die beiden Schraubgewinde 79, 80 einen Bestandteil des Spanngetriebes 23a bilden. Denkbar wäre auch ein Ausführungsbeispiel, bei dem ein Verriegelungsmotor in der Art des Verriegelungsmotors 22 den Formschlusselement-Träger 78 oder ein Formschlusselement direkt, d.h. ohne ein zwischengeschaltes Getriebe 23a, antreibt.

Vorteilhaft ist eine Steigung der Schraubgewinde 79, 80 zu einer Selbsthemmung ausgestaltet, so dass an sich ein Lösen der Verriegelung nicht zu befürchten ist.

Ein Getriebegehäuse 81 des Spanngetriebes 23a, zumindest des Planetengetriebeanteils davon, hat eine im Wesentlichen kubische Gestalt. Das Getriebegehäuse 81 bildet einen Gleitkörper, der in einer Führung 82 im Innern des Antriebsgehäuses 26 linear verdrehsicher geführt ist. Die Führung 82 wird beispielsweise durch einen Führungskanal oder eine Führungsausnehmung im Antriebsgehäuse 26 gebildet.

Die Anhängekupplung 10a hat eine Mitnahmeeinrichtung 83a zu einer Mitnahmekopplung des Verriegelungsantriebs 21a mit dem Rastkörper 32a, vorliegend also dem Sicherungsbolzen 59.

Eine Klinke 84a der Mitnahmeeinrichtung 83a ist schwenkbeweglich am Rastkörper 32a gelagert. Die Klinke 84a ist vorliegend durch ein Winkelstück gebildet, bei dem ein Lagerschenkel 85 von dem Sicherungsbolzen 59 mit Schwenkspiel durchdrungen ist und ein Mitnehmerschenkel 86 zur Mitnahmekopplung mit dem Verriegelungsantriebe 21a vorgesehen ist.

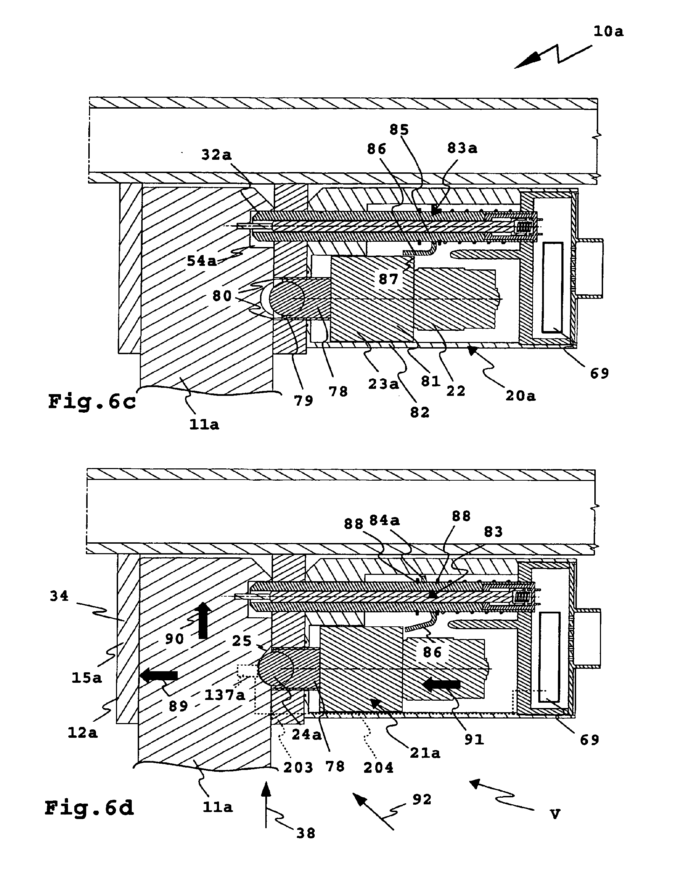

Während der Verriegelungsbewegung 91 (Figur 6c) ist keine Mitnahmekopplung zwischen dem Verriegelungsantrieb 21a und der Mitnahmeeinrichtung 83a vorgesehen. Der Verriegelungsantrieb 21a gleitet an einer Gleitfläche 87 an der dem Verriegelungsantrieb 21a zugewandten Unterseite des Mitnehmerschenkels 86 entlang. Vorliegend bildet das Getriebegehäuse 81 den Gleitkörper des Verriegelungsantriebs 21a. Die Klinke 84a bleibt dabei ortsfest, da sie zwischen zwei Längsvorsprüngen, beispielsweise Flanschen 88, des Rastkörper 32a linear festgelegt ist. Zwischen den beiden Flanschen 88 ist ein ein Schwenken der Klinke 84a zulassender Abstand vorgesehen.

Am Ende der Verriegelungsbewegung des Verriegelungsantriebs 21a presst dieser das Formschlusselement 24a in die Formschlusskontur 25, das heißt die Formschlussaufnahme, am Kupplungsarm 11a ein (Figur 6d). Die Verriegelungseinrichtung 20a übt dabei eine Spannkraft 89 quer zu der Einsteckrichtung 38 und eine Spannkraft 90 parallel zur Einsteckrichtung 38 aus, so dass der Kupplungsarm 11a in beiden Richtungen in die Steckaufnahme 14 gespannt ist. Durch die Spannkraft 90 schlägt der Steckanschlagkörper 49 an dem Steckanschlag 39 an.

Die Spannkraft 89 verläuft parallel zur Bewegungsrichtung einer Verriegelungsbewegung 91 des Verriegelungsantriebs 21a in seine Verriegelungsstellung. Somit presst der Verriegelungsantrieb 21a den Kupplungsarm 11a gegen die ihm gegenüberliegende Seitenwand 34 des Haltergehäuses 15a.

Da die Bewegungsrichtung der Verriegelungsbewegung 91 quer zur Einsteckrichtung 38 verläuft, ist zur Erzeugung der Spannkraft 90 eine Kraftrichtungsumkehr nötig. Die Konturgestaltung der Formschlusskontur 25 ist so getroffen, dass sie die quer zur Einsteckrichtung 38 verlaufende Spannkraft 89 in Richtung der Spannkraft 90 umlenkt. Dazu verläuft die Formschlusskontur 25 beispielsweise in Kraftrichtung der Spannkraft 90 flacher und entgegen dieser Richtung steiler, was in Figur 6c erkennbar ist. Ferner ist eine außermittige Anordnung der Formschlusskontur 25 und des Formschlusselements 24a relativ zueinander zu einer Kraftrichtungsänderung vorteilhaft.

Wenn die Bewegungsrichtung oder Spannrichtung eines erfindungsgemäßen Verriegelungsantriebs jedoch schräg verläuft, etwa entsprechend einer Pfeilrichtung 92 (Figur 6b), was man beispielsweise durch eine entsprechende Schrägführung des Verriegelungsantriebs oder eine Kraftumlenkung durch ein Getriebe bewirken könnte, ist eine Kraftumlenkung wie beispielsweise bei der Formschlusskontur 25 nicht nötig.

Der Formschlusselement-Träger 78 mit seinem stirnseitig angeordneten Formschlusselement 24a, das beispielsweise in eine kalottenartige Aufnahme am stirnseitigen Ende des Formschlusselement-Trägers 78 eingepresst ist, bildet eine Art Spannschraube zum Verspannen des Kupplungsarms 11a am Halter 12a. Die selbsthemmende Wirkung der Schraubgewinde 79, 80 verhindert an sich ein Lockern des Kupplungsarms 11a am Halter 12a. Dennoch ist es beim Fahrbetrieb des Kraftfahrzeugs 19 nicht vollständig auszuschließen, dass sich der Kupplungsarm 11a lockert, beispielsweise nach längerem Nichtgebrauch, nach langem Fahrbetrieb, bei besonders hoher Belastung, durch Vibrationen oder dergleichen.

Gegen dieses Lockern ist vorteilhaft vorgesehen, dass die Steuerung 69 den Verriegelungsantrieb 21a immer wieder zu einem Nachspannen, das heißt zu einer Verriegelungsbewegung in Richtung der Verriegelungsstellung V, ansteuert. Dies kann beispielsweise im Rahmen eines vorbestimmten Zyklus' geschehen, zum Beispiel alle 10 Minuten oder dergleichen. Die Verriegelungseinrichtung 20a ist in dieser Situation zur Einnahme der Verriegelungsstellung V angesteuert, die Verriegelungsstellung V ist an sich erreicht (Figur 6d). Die Steuerung 69 kann auch weitere Auslösebedingungen zu dem Nachspannen des Kupplungsarms 11a auswerten und beispielsweise bei jedem Start eines Antriebs 93 des Kraftfahrzeugs 19 den Kupplungsarm 11a nachspannen.

Dieses Nachspannen kann zweckmäßigerweise getaktet sein, wobei der Verriegelungsmotor 22 des Verriegelungsantriebs 21a zu zwei- oder dreimaligem kurzzeitigem Verriegelungsbetrieb von der Steuerung 69 angesteuert wird.

Vorteilhaft ist bei dem Verriegelungsmotor 22 und/oder der Steuerung 69 eine Strombegrenzungsschaltung zur Begrenzung eines Stroms beim Antreiben des Verriegelungsmotors 22, insbesondere zu seinem Abschalten der Verriegelungsstellung oder Spannstellung, vorgesehen, wenn das mindestens eine Formschlusselement mit der Formschlusskontur in Eingriff ist.

Wenn die Steuerung 69 einen Entriegelungsbefehl erhält, steuert sie den Verriegelungsantrieb 21a zu einer Entriegelungsbewegung 94 in Richtung der Entriegelungsstellung E an, so dass der Formschluss zwischen dem Formschlusselement 24a und der Formschlusskontur 25 aufgehoben wird (Figuren 6e-6g). Zudem sorgt die Mitnahmeeinrichtung 83a dafür, dass auch der Rasteingriff des Rastkörpers 32a in der Rastaufnahme beziehungsweise Rastkontur 54a aufgehoben wird. Dabei ist die Bewegungsfolge so, dass zunächst die Verspannung beziehungsweise der Formschluss durch das Formschlusselement 24a und die Formschlusskontur 25 aufgehoben wird, so dass der Kupplungsarm 11a am Halter 12a etwas Spiel erhält. Erst dann wird der Rastkörper 32a aus der insbesondere als Rastaufnahme ausgestalteten Rastkontur 54a herausbewegt.

Bereits kurz vor Erreichen der Verriegelungsstellung V kommt die Klinke 84a insoweit von dem Verriegelungsantrieb 21a frei, dass sie schwenken kann. Die Klinke 84a schwenkt in Richtung des Verriegelungsantriebs 21a (nach unten; Figur 6d), so dass eine Mitnehmerfläche 95 der Klinke 84a einem Mitnahmeanschlag 96 des Verriegelungsantriebs 21a gegenüberliegt. Die Mitnehmerfläche 95 ist beispielsweise die Stirnseite des Mitnehmerschenkels 86. Der Mitnahmeanschlag 96 ist beispielsweise am Getriebegehäuse 81 vorgesehen, zum Beispiel an dessen dem Verriegelungsmotor 22 zugewandter Stirnseite.

Wenn nun der Verriegelungsantrieb 21a die Entriegelungsbewegung 94 durchführt (ab Figur 6e), schlägt die Klinke 84a am Mitnahmeanschlag 96 an, so dass der Rastkörper 32a aus dem Rasteingriff mit der Rastkontur 54a bewegt wird. Die Klinke 84a schlägt dabei an dem in der Zeichnung rechten Flansch 88 an.

Wenn der Rastkörper 32a vollständig aus der Rastkontur 54a herausbewegt ist, mithin also die Entriegelungsstellung E erreicht ist (Figur 6f), fällt der Kupplungsarm 11a aufgrund seiner Schwerkraft aus der Steckaufnahme 14a selbständig heraus und kann vom Bediener vom Halter 12a entfernt werden.

Wenn der Verriegelungsantrieb 21a die Entriegelungsstellung E erreicht hat, kommt die Mitnahmeeinrichtung 83a von der Mitnahmekopplung frei. Die Klinke 84a schlägt mit einer Freigabeanschlagfläche 97, die beispielsweise am Lagerschenkel 85 angeordnet ist, an einem im Bewegungsweg der Entriegelungsbewegung 94 angeordneten Freigabeanschlag 98 an. Der Freigabeanschlag 98 ist beispielsweise mit dem Antriebsgehäuse 26 verbunden. Die Klinke 84a schwenkt dann vom Verriegelungsantrieb 21a weg, und zwar so weit, dass die Mitnehmerfläche 95 außer Eingriff mit dem Mitnahmeanschlag 96 kommt. Zudem ist die Gleitfläche 87 oberhalb des Getriebegehäuses 81. Der Rastkörper 32a ist vom Verriegelungsantrieb 21a entkoppelt und kann eine Rastbewegung 99 in Richtung der Steckaufnahme 14 durchführen. Ein Wiederverrasten mit dem Kupplungsarm 11a (Figur 6a) ist dann wieder möglich.

Eine Eindringtiefe des Formschlusselements 24a in die zugeordnete Formschlusskontur 25 ist größer als eine entsprechende Eindringtiefe des Rastkörpers 32a in die ihm zugeordnete Rastkontur 54a. Dies trägt dazu bei, dass zunächst die Formschlussverbindung zwischen dem Formschlusselement 24a und der Formschlusskontur 25 und anschließend die Rastverbindung zwischen dem Rastkörper 32a und der Rastkontur 54a aufgehoben wird.

Zum Einschalten des Verriegelungsantriebs 21a in Richtung der Verriegelungsstellung V ist der Schalter 77 vorgesehen, der sozusagen automatisch durch das Einstecken des Kupplungsarms 11a in die Steckaufnahme 14 ausgelöst wird und der Steuerung 69 signalisiert, den Verriegelungsantrieb 21a zu einer Verriegelungsbewegung anzusteuern.

Zur Betätigung in die Entriegelungsstellung E ist ein separater Antriebsschalter 100a vorgesehen. Der Antriebsschalter 100a ist mit einem Betätigungselement 101a im Außenbereich des Kraftfahrzeugs 19 betätigbar. Das Betätigungselement 101a hat einen Bedienbereich 102 nahe der Steckaufnahme 14. Somit kann ein Bediener gleichzeitig und vor Ort den Verriegelungsantrieb 21a zu einer Entriegelung ansteuern und zugleich den Kupplungsarm 11a ergreifen.

Das Betätigungselement 101a und der Antriebsschalter 100a sind in einem gemeinsamen Betätigungsgehäuse 103 angeordnet. Das Betätigungselement 101a bildet eine Druckfläche beziehungsweise ein Druckelement zur Betätigung beziehungsweise zum Schließen elektrischer Kontakte des Antriebsschalters 100a. Das Betätigungsgehäuse 103 ist an einem Bedienteilträger 104 angeordnet. Der Bedienteilträger 104 ist integral mit einem Steckdosenträger 105 für eine Anhänger-Steckdose 106 zum elektrischen Anschluss des Anhängers 17 an das Kraftfahrzeug 19 verbunden. Ein die Anhänger-Steckdose 106 tragender Tragabschnitt 107 des Steckdosenträgers 105 steht beispielsweise vom Antriebsgehäuse 26 nach unten vor und ist vorzugsweise an diesem festgelegt.

Es versteht sich, dass man einen Steckdosenträger und/oder einen Bedienteilträger auch beispielsweise am die Steckaufnahme aufweisenden Haltergehäuse oder unmittelbar zum Beispiel auch am Kraftfahrzeug, z.B. dem Querträger 18, befestigen könnte.

Der Tragabschnitt 107 sowie der Bedienteilträger 104 sind zueinander winkelig. Der Bedienteilträger 104 verläuft im Wesentlichen tangential neben dem Kupplungsarm 11a, beispielsweise im Bereich des unteren Krümmungsabschnittes 42. Die Querschmalseite 53 des Kupplungsarms 11a und der plattenartige Bedienteilträger 104 verlaufen parallel zueinander.

Diese Anordnung hat den Vorteil, dass das Betätigungselement 101a unmittelbar neben dem Kupplungsarm 11a angeordnet ist und der Bediener zugleich das Betätigungselement 101a betätigen und den Kupplungsarm 11a ergreifen kann.

Zudem hat diese winkelige Konfiguration, bei der ein Steckdosengehäuse 108 und der Bedienteilträger 104 im Wesentlichen parallel zueinander verlaufen, den nachfolgenden Vorteil:

Zum Einstecken eines Anhängersteckers in die Anhänger-Steckdose 106 muss ein Dosendeckel 109 aufgeklappt werden, damit die Kontakte im Innern des Steckdosengehäuses 108 zugänglich sind (Figur 7). Nun ist der Dosendeckel 109 derart am Steckdosengehäuse 108 angelenkt, dass er beim Aufschwenken das Betätigungselement 101a verdeckt. Somit ist es nicht mehr möglich, den Antriebsschalter 100a zu betätigen. Dies stellt einen Fehlbedienungsschutz dar, da bei eingestecktem Anhängerstecker ein Lösen des Kupplungsarms 11a ohnehin nicht sinnvoll und wünschenswert ist. Weiterhin ist das Betätigungselement 101a durch den geöffneten Dosendeckel 109 beim Fahrbetrieb eines Gespanns aus Kraftfahrzeug 19 und Anhänger 17 verdeckt, so dass das Betätigungselement 101a gegen eine Fehlbetätigung beispielsweise durch umherfliegende Äste oder dergleichen geschützt ist.

Als optionale Sicherheitsmaßnahme ist bei der Anhänger-Steckdose 106 vorteilhaft ein Aktivierungsschalter 110 vorgesehen, der durch Öffnen und Schließen des Dosendeckels 109 betätigbar ist. Bei geöffnetem Dosendeckel 109 unterbricht der Aktivierungsschalter 110 beispielsweise eine elektrische Verbindung zum Antriebsschalter 100a, um somit den Antriebsschalter 100a zu deaktivieren. Bei geschlossenem Dosendeckel 109 hingegen schaltet der Aktivierungsschalter 110 den Antriebsschalter 100a aktiv. Das Konzept eines durch einen Dosendeckel schaltbaren Aktivierungsschalters ist auch vorteilhaft einsetzbar, wenn der geöffnete Dosendeckel 109 beispielsweise das Betätigungselement 101a nicht verdecken könnte, z.B. bei einem anderen Anbringungsort. Ferner kann das Konzept auch bei Anhängekupplungen mit schwenkbarem und/oder verschieblich gelagertem Kupplungsarm zum Aktiveren eines motorischen Kupplungsarm-Verstellantriebs und/oder einer motorischen Verriegelungseinrichtung verwendet werden.

Es versteht sich, dass der Antriebsschalter 100a nicht unmittelbar im Außenbereich, das heißt in der Nähe des Halters 12a, angeordnet sein muss. Es wäre beispielsweise auch möglich, den Antriebsschalter 100a im Innenraum des Kraftfahrzeugs 19, beispielsweise im Kofferraumbereich oder dergleichen, anzuordnen und zwischen dem im Außenbereich nahe beim Halter 12a angeordneten Betätigungselement 101a und dem Antriebsschalter 100a ein Übertragungsglied oder eine Übertragungsgliederanordnung vorzusehen. Das Übertragungsglied 111 ist beispielsweise ein Bowdenzug, ein Seilzug, ein Übertragungsgetriebe oder -gestänge. Auch eine fluidische, beispielsweise pneumatische Übertragung des Betätigungselements 101a auf den im Innern angeordneten Antriebsschalter 100a ist ohne weiteres möglich.

Ein weiteres, innovatives Bedienkonzept bei der Anhängekupplung 10a beruht auf einer drahtlosen Bedienung. Nun wäre es zwar prinzipiell möglich, den Verriegelungsantrieb 21a ausschließlich drahtlos anzusteuern und so die Verriegelung und/oder die Entriegelung sozusagen aus der Ferne vorzugeben. Dies könnte bei einer in der Zeichnung nicht dargestellten Variante der Anhängekupplung realisiert sein.

Bevorzugt ist jedoch eine Variante, bei der die Verriegelung, wie oben bereits beschrieben, durch das Einstecken des Kupplungsarms 11a in die Steckaufnahme 14 mittels des Schalters 77 automatisch ausgelöst wird. Zur Entriegelung ist ein drahtloses Konzept vorgesehen, das allerdings vorteilhaft nach einem weiteren innovativen, Ansatz nur im Nahbereich um die Steckaufnahme 14 des Halters 12a funktioniert. An sich ist ein drahtloses Ansteuern, das nur im Nahbereich des Halters funktioniert, auch bei Anhängekupplungen mit schwenkbarem und/oder verschieblich gelagertem Kupplungsarm zum Aktiveren eines motorischen Kupplungsarm-Verstellantriebs und/oder einer motorischen Verriegelungseinrichtung vorteilhaft.

In diesem Fall umfasst ein weiteres Betätigungselement 101b einen Funkempfänger 112 mit einem eng begrenzten, nämlich nur im Bereich des Halters 12a wirksamen Empfangsbereich 113 für einen Sender 114, der beispielsweise in einem Gehäuse eines Fahrzeugschlüssels 115 zum Starten des Kraftfahrzeugs 19 angeordnet ist. Wenn sich der Bediener mit dem Fahrzeugschlüssel 115 also in der Nähe des Kupplungsarms 11a befindet, kann er den Sender 114 beispielsweise mittels eines Tastendrucks auf eine Bedientaste am Schlüsselgehäuse des Fahrzeugschlüssels 115 betätigen und somit einen Entriegelungsbefehl an den Funkempfänger 112 senden. Dieser meldet das Entriegelungssignal an die Steuerung 69, welche den Verriegelungsantrieb 21a zu einer Entriegelung der Verriegelungseinrichtung 20a ansteuert. Es versteht sich, dass auf demselben Wege prinzipiell auch eine drahtlose Ansteuerung zu einer Verriegelung der Verriegelungseinrichtung 20a möglich ist. Ferner wäre es möglich, den Sender 114 in einem separaten Gehäuse, das zweckmäßigerweise als ein Schlüsselanhängergehäuse ausgestaltet ist, anzuordnen.

Ein Bediener kann die Funktion der Verriegelungseinrichtung 20a mittels einer Funktionsanzeigeeinrichtung 116a erkennen. Die Funktionsanzeigeeinrichtung 116a umfasst beispielsweise eine Leuchtanzeige, insbesondere eine LED. Die Funktionsanzeigeeinrichtung 116a ist zweckmäßigerweise im Bedienbereich 102 angeordnet, so dass der Bediener vor Ort beim Anbringen des Kupplungsarms 11a am Halter 12a oder bei dessen Entnehmen erkennt, ob und wie die Verriegelungseinrichtung 20a funktioniert. Die Funktionsanzeigeeinrichtung 116a zeigt beispielsweise eine korrekte Verriegelung des Kupplungsarms 11a mit einer grünen Leuchtanzeige an, eine Entriegelung mit einer roten Leuchtanzeige. Während der Verriegelungsantrieb 21a läuft, blinkt die Funktionsanzeigeeinrichtung 116a.

Es versteht sich, dass auch weitere Anbringungsorte für erfindungsgemäße Funktionsanzeigeeinrichtungen möglich sind. So sind beispielsweise ebenfalls als Leuchtanzeigen ausgestaltete Funktionsanzeigeeinrichtungen 116b, 116c am Dosendeckel 109 und am Steckdosengehäuse 108 angeordnet. Die Funktionsanzeigeeinrichtung 116c kann beispielsweise bei geschlossenem Dosendeckel 109 signalisieren, dass der Antriebsschalter 100a aktivgeschaltet ist.

Auch eine akustische Funktionsanzeige ist vorteilhaft. So kann die Steuerung 69 beispielsweise eine akustische Funktionsanzeigeeinrichtung 117 umfassen, zum Beispiel einen Lautsprecher, der bei einem Fahrbetrieb des Verriegelungsmotors 22 ein Funktionsgeräusch, beispielsweise eine pulsierende Tonfrequenz, ausgibt. Ist die Verriegelung erfolgreich verlaufen, quittiert dies die Funktionsanzeigeeinrichtung 117 mit einem Dauerton für eine vorbestimmte Zeit. Es versteht sich, dass die Steuerung 69 auch einen Lautsprecher des Kraftfahrzeugs 19 vorteilhaft ansteuern kann (nicht dargestellt), z.B. einen Lautsprecher eines Audiosystems.

Weiterhin enthält die Steuerung 69 vorteilhaft einen Signalausgang 118 zur Ansteuerung einer Funktionsanzeigeeinrichtung 119 des Kraftfahrzeugs. Der Signalausgang 118 ist beispielsweise ein Bestandteil einer Busschnittstelle der Steuerung 69. Die Funktionsanzeigeeinrichtung 119 ist beispielsweise ein Display im Cockpit 120 des Kraftfahrzeugs 19.

Es versteht sich, dass auch nur eine der Funktionsanzeigeeinrichtungen 116a-c, 117 und/oder der Signalausgang 118 vorgesehen sein können. Die Funktionsanzeigeeinrichtungen 116a-c, 117 und der Signalausgang 118 sind vorteilhafte Optionen.

Bei der Anhängekupplung 10a ist zu dem bereits erläuterten Sicherheitskonzept mittels des Dosendeckels 109 ein weiteres, innovatives Sicherheitskonzept realisiert, das zugleich einen optimalen Diebstahlschutz darstellt.

Die Steuerung 69 schaltet nämlich den Verriegelungsmotor 22 und/oder den Antriebsschalter 100a und/oder 100b nicht dauerhaft aktiv, sondern nur für ein vorbestimmtes Zeitintervall anhand mindestens einer Auslösebedingung.

Diese Auslösebedingung kann beispielsweise ein von einem Freigabeschalter sendbares Freigabesignal sein. Beispielsweise ist im Cockpit 120 ein Freigabeschalter 121a und/oder in einem Gepäckabteil 122 des Kraftfahrzeugs 19 ein Freigabeschalter 121b angeordnet. Der Bediener kann beispielsweise somit im Innenraum des Kraftfahrzeugs 19 einen der Freigabeschalter 121a, 121b betätigen, worauf die Steuerung 69 für ein Zeitintervall, beispielsweise 15-30 Sekunden, den Antriebsschalter 100a aktiv schaltet, d.h. einen Betrieb des Verriegelungsmotors 22 zulässt. Der Bediener hat dann bequem Zeit, zum Halter 12a zu gehen und dort die Verriegelungseinrichtung 20a zu entriegeln.

Ein weiteres, innovatives Freigabekonzept ist in der Art des Keyless-Go ausgestaltet. Die Steuerung 69 umfasst einen zweckmäßigerweise am Halter 12a, beispielsweise am Antriebsgehäuse 26, angeordneten Funkempfänger 123 zum Empfang eines Freigabesignals, das mit einem hierfür vorgesehenen Freigabesender 124, der somit einen Freigabeschalter 121c darstellt, sendbar ist. Der Freigabesender 124 ist beispielsweise in einem Schlüsselanhängergehäuse 125 angeordnet. Er könnte auch beispielsweise im Fahrzeugschlüssel oder am Fahrzeugschlüssel 115 angeordnet sein. Der Funkempfänger 123 hat einen eng begrenzten Empfangsbereich ähnlich dem Empfangsbereich 113, so dass nur dann, wenn der Freigabesender 124 im Empfangsbereich des Funkempfängers 123 ist, der Antriebsschalter 100a freigeschaltet ist.

Es versteht sich, dass eine Freigabe zum Schalten der Verriegelungseinrichtung 20a in ihre Verriegelungsstellung V oder ihre Entriegelungsstellung E anhand eines der Freigabeschalter 121a-121c auch zeitlich unlimitiert, das heißt ohne das vorgenannte Zeitintervall, erfolgen kann. So kann der Antriebsschalter 100a beispielsweise immer dann aktivgeschaltet sein, wenn der Freigabesender 124 vom Funkempfänger 123 im Empfangsbereich 113 erkannt wird.

Nachfolgend werden verschiedene Szenarien vorgestellt, bei denen jeweils für ein Zeitintervall einer oder mehrere der Antriebsschalter 100a, 100b oder 100c von der Steuerung 69 aktivgeschaltet werden und nach Ablauf des Zeitintervalls wieder inaktiv.

Beispielsweise wertet die Steuerung 69 eine Funktionsstellung eines Motorstartschalters 126 aus und/oder ob der Fahrzeugschlüssel 115 in den Motorstartschalter 126 gesteckt ist. So kann beispielsweise vorgesehen sein, dass die Steuerung 69 nach einem Ausschalten des Antriebs 93 des Kraftfahrzeugs 19 das Zeitintervall startet. Auch ein Entfernen des Fahrzeugschlüssels 115 aus einem Zündschloss oder aus dem Motorstartschalter 126 kann für die Steuerung 69 eine Auslösebedingung zum Starten des Zeitintervalls sein.

Auch das Bestromen einer Leuchte des Kraftfahrzeugs 19, vorzugsweise einer Heckleuchte, kann eine Startbedingung für das Starten des Zeitintervalls zur Aktivschaltung eines Antriebsschalters 100a und/oder 100b sein. Vorzugsweise wertet die Steuerung 69 dazu Signale beziehungsweise Bestromungen von Heckleuchten, beispielsweise einer Nebelschlussleuchte 127 und/oder eines Rückfahrscheinwerfers 128 und/oder von Blinkleuchten 129 aus. Die Steuerung 69 ist zur Überprüfung einer Bestromung der Leuchten 127-129 mit Stromversorgungsleitungen 130 eines Bordnetzes 131 des Kraftfahrzeugs 19 verbunden. Aufgrund der Anbindung an Stromversorgungsleitungen für Heckleuchten sind dabei die Leitungswege kurz. Wenn nun der Bediener des Kraftfahrzeugs 19 beispielsweise einen Rückwärtsgang einlegt, werden die Rückfahrscheinwerfer 128 aktiviert und die Steuerung 69 startet infolgedessen das Zeitintervall. Dazu kommt vorzugsweise eine zweite Auslösebedingung, die die Steuerung prüft, beispielsweise "Klemme 15 eingeschaltet", in der Regel die zweite Rastung des Motorstartschalters 126.

Eine weitere Variante kann vorsehen, dass beispielsweise beim Aktivieren der Nebelschlussleuchte 127 das Zeitintervall oder Zeitfenster zur Aktivierung des Antriebsschalters 100a, 100b von der Steuerung 69 geöffnet beziehungsweise gestartet wird. Auch hier wird zusätzlich zur Auslösebedingung "Nebelschlussleuchte an" vorzugsweise eine zusätzliche Auslösebedingung von der Steuerung 69 ausgewertet, das heißt also eine Auslösebedingungsgruppe. Diese zweite Auslösebedingung kann beispielsweise ebenfalls heißen, dass der Motorstartschalter 126 aktivgeschaltet ist ("Klemme 15 ein").

Durch die zusätzliche Auswertung der Stellung des Motorstartschalters 126 ist eine Diebstahlsicherung und eine Maßnahme gegen Fehlbedienung oder Manipulation realisiert.

Es versteht sich, dass die Steuerung 69 bei beiden Szenarien zweckmäßigerweise überprüft, ob der Antrieb 93 ausgeschaltet ist. Mithin ist es also bei laufendem Motor des Kraftfahrzeugs 19 nicht möglich, den Kupplungsarm 11a zu entriegeln und vom Halter 12a zu entnehmen.

Ein weiteres, besonders bevorzugtes Szenario sieht vor, dass die Steuerung 69 das Zeitintervall zur Aktivierung der Antriebsschalter 100a oder 100b nach dem Abstellen des Kraftfahrzeugs 19 beziehungsweise Deaktivieren desselben startet. Die Auslösebedingungsgruppe umfasst hier die Auslösebedingung, dass der Motorstartschalter 126 ausgeschaltet ist (in der Regel "Klemme 15 aus") und zudem mindestens eine, zweckmäßigerweise beide Blinkleuchten 129 bestromt werden. Hier macht man sich zunutze, dass ein Kraftfahrzeug nach dem Abstellen in der Regel verschlossen wird, wobei Kraftfahrzeuge in der Regel zur Quittierung eines korrekten Verschließvorganges die Blinkleuchten für eine Leuchtsequenz aktivieren, die mindestens ein Aufleuchten der Blinkleuchten umfasst. Wenn also der Motorstartschalter 126 in Stellung "Aus" geschaltet wird und zudem eine oder beide Blinkleuchten 129 mindestens einmal bestromt werden, öffnet die Steuerung 69 das Zeitfenster zur Aktivierung des Antriebsschalters 100a und/oder 100b. Nur dann ist beispielsweise der von außen zugängliche beziehungsweise betätigbare Antriebsschalter 100a freigeschaltet, so dass Fehlbedienungen oder Manipulationen nicht möglich sind. Durch die Abtastung/Ermittlung der Bestromung zweier Blinkleuchten ist eine hohe Fehlbedienungssicherheit oder Sicherheit gegen Fehlauswertung gegeben.

Zweckmäßigerweise ist vorgesehen, dass die Steuerung 69 eine Aktivschaltung des Antriebsschalters 100a und/oder 100b für das Zeitintervall oder Zeitfenster optisch und/oder akustisch signalisiert, beispielsweise über die Cockpit-Funktionsanzeigeeinrichtung 119, wo im Klartext angezeigt werden kann: "Anhängekupplung entriegelbar", und/oder an den extern angeordneten Funktionsanzeigeeinrichtungen 116a-116c. Diese können beispielsweise blinken, eine vorbestimmte Farbe anzeigen oder dergleichen, um die Betriebsbereitschaft beziehungsweise Entriegelungs- oder Verriegelungsbereitschaft zu signalisieren.

Eine weitere Sicherheitsmaßnahme gegen Fehlbedienung kann vorteilhaft vorsehen, dass die Steuerung 69 nur dann ein Starten des Antriebsschalters 100a oder ein Starten des Verriegelungsmotors 22 zulässt, wenn der Antriebsschalter 100a nach Beginn des Zeitintervalls von einer unbetätigten Stellung in eine Betätigungsstellung betätigt wird. Wenn also bereits vor Beginn des Zeitintervalls beispielsweise durch Verschmutzung, Kurzschluss oder dergleichen vom Antriebsschalter 100a das Signal "Verriegelungsmotor 22 an" und/oder "Verriegeln" und/oder "Entriegeln" kommt, startet die Steuerung 69 den Verriegelungsmotor 22 nicht.

Während einer Bestromung des Verriegelungsmotors 22 oder einer Betätigung des Antriebsschalters 100a ist es vorteilhaft, dass die Steuerung 69 das Zeitintervall gegebenenfalls verlängert, um eine vollständige Verriegelung oder Entriegelung zu ermöglichen.

Das Konzept des Zeitintervalls ist auch bei Anhängekupplungen mit schwenkbarem und/oder verschieblich gelagertem Kupplungsarm zum Aktiveren eines motorischen Kupplungsarm-Verstellantriebs und/oder einer motorischen Verriegelungseinrichtung vorteilhaft.

Eine Sicherheitsmaßnahme kann zudem vorsehen, dass die Steuerung 69 den Verriegelungsmotor 22 nur während einer Betätigung des jeweiligen Antriebsschalters 100a oder 100b bestromt, das heißt, dass der Verriegelungsvorgang oder Entriegelungsvorgang beim Loslassen des jeweiligen Antriebsschalters abgebrochen wird. Dabei kann es vorteilhaft sein, wenn die Steuerung 69 den Verriegelungsmotor 22 zu einer Entriegelungsbewegung 94 beziehungsweise Entriegelung ansteuert.

Die Verriegelungseinrichtung 20a hat zum Anschluss an das Bordnetz 131 beispielsweise elektrische Kontakte 132, insbesondere eine Anschlussbuchse. Die elektrischen Kontakte 132 sind zweckmäßigerweise auch zum Anschluss der Anhänger-Steckdose 106 vorgesehen, so dass sämtliche elektrischen Anschlüsse der Anhängekupplung 10a sozusagen gebündelt bei den Kontakten 132, das heißt an einem einzigen Anschlussort, zur Verfügung stehen. Die Kontakte 132 stehen beispielsweise vor das Steuerungsgehäuse 68 vor, in dessen Innenraum die elektrischen Komponenten der Steuerung 69 angeordnet sind.

Die Steuerung 69 umfasst beispielsweise einen Mikrocontroller, einen FPGA oder sonstige, zweckmäßigerweise programmierbare Komponenten.

Eine Variante der Erfindung sieht vorteilhaft vor, dass die Steuerung 69 beispielsweise auf eine oder mehrere der vorgenannten Auslösebedingungen programmierbar ist. Auch sonstige Parameter, beispielsweise eine Länge des Zeitintervalls zur Aktivierung der Antriebsschalter 100a, 100b, sind zweckmäßigerweise parametrierbar oder programmierbar, beispielsweise über ein Diagnosegerät einer Werkstatt. Vorteilhaft ist es, wenn ein Bediener selbst, z.B. im Cockpit 120, die Länge des Zeitintervalls und/oder sonstige Parameter der Steuerung 69 einstellen kann. Wenn der Bediener die vorteilhafte Bediensicherheit und Fehlmanipulationssicherheit nicht wünscht, kann er das Zeitintervall beispielsweise auf unendlich programmieren, so dass es sozusagen nie endet und der Antriebsschalter 100a und/oder 100b stets aktiviert sind. Zweckmäßigerweise ist allerdings die Auslösebedingung, dass der Antrieb 93 des Kraftfahrzeugs 19 während eines Verriegelns oder Entriegelns der Anhängekupplung 10a außer Betrieb ist, nicht ausparametrierbar.

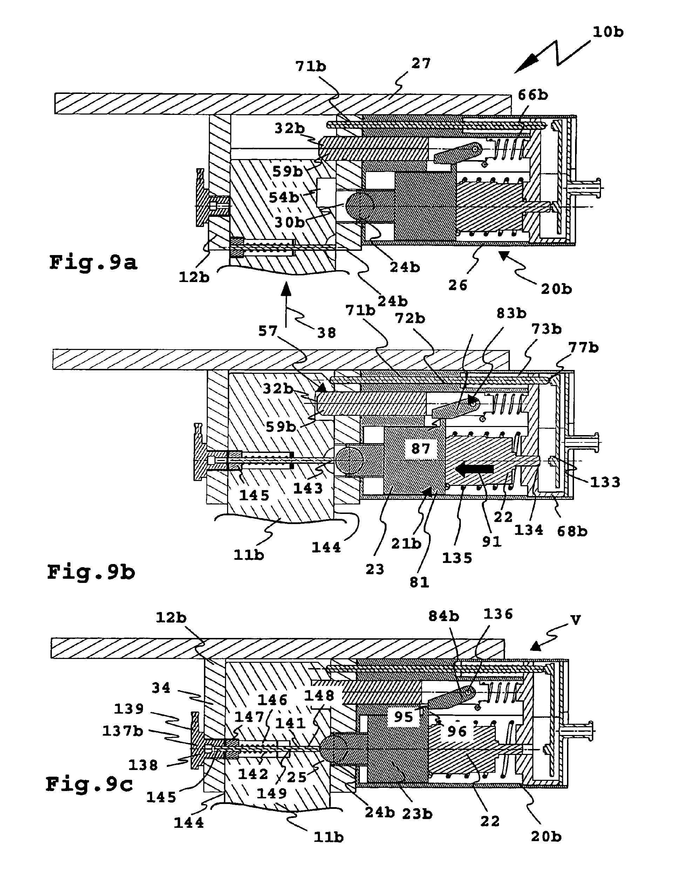

Die Verriegelungseinrichtung 20b der Anhängekupplung 10b sieht ähnlich wie die Verriegelungseinrichtung 20a eine Vorverrastung des Kupplungsarms 11b beim Einstecken in die Steckaufnahme 14 vor. Dafür ist ein Rastkörper 32b vorgesehen, der in eine korrespondierende Rastkontur oder Rastaufnahme 54b beim Einstecken des Kupplungsarms 11a einrastet. Das freie Ende des Rastkörpers 32b ist seitlich angeschrägt und gleitet an der Einführschräge oder Verdrängerschräge 55 des Kupplungsarms 11b beim Einstecken entlang (Figur 9a). Dadurch wird der Rastkörper 32b vom Kupplungsarm 11b weg in Richtung des Antriebsgehäuses 26 entgegen der Federkraft einer Federanordnung oder Feder 66b verdrängt. Mithin steht also das vordere Ende des Rastkörpers 32b dann nicht mehr in die Steckaufnahme 14 vor, so dass der Kupplungsarm 11b vollständig in die Steckaufnahme 14 einsteckbar ist (Figur 9b).

Dann rastet der Rastkörper 32b in die zugeordnete Rastaufnahme oder Rastkontur 54b am Kupplungsarm 11b ein. Hier ist zu bemerken, dass auch der Rastkörper 32b ein zusätzliches Verriegelungsmittel oder Sicherungsmittel zum Halten des Kupplungsarms 11b am Halter 12b bildet. Der Rastkörper 32b bildet einen Sicherungsbolzen 59b, also einen Sicherungskörper.

Beim Einstecken in die Steckaufnahme 14 verdrängt der Kupplungsarm 11b zudem ein Betätigungselement 71b zum Betätigen eines elektrischen Schalters 77b, mit dem der Verriegelungsantrieb 21b zu der Verriegelungsbewegung 91 in Richtung der Verriegelungsstellung V ansteuerbar ist. Im Unterschied zu der Verriegelungseinrichtung 20a ist das Betätigungselement 71 unabhängig vom Rastkörper 32b am Antriebsgehäuse 26 beweglich gelagert. Das Betätigungselement 71b umfasst einen Taststößel 72b, der oberhalb des Sicherungsbolzens 59b im Antriebsgehäuse 26 beweglich gelagert ist. Der Taststößel 72b ist durch eine Feder oder Federanordnung 73b in seine Nichtbetätigungsstellung vorbelastet, in der er in die Steckaufnahme 14 vorsteht (Figur 9a).

Wenn das Betätigungselement 71b betätigt ist (Figur 9b), stellt ein hinteres Ende des Taststößels 72b einen elektrischen Kontakt zu einer Verbindungsbrücke 133 her. Die Verbindungsbrücke 133 ist in einem Kontaktgehäuse oder Steuerungsgehäuse 68b im hinteren, von der Steckaufnahme 14 entfernten Bereich des Antriebsgehäuses 26 angeordnet. Das Steuerungsgehäuse 68b schützt die elektrischen Kontakte der Verriegelungseinrichtung 20b. Die Verbindungsbrücke 133 steht in Verbindung mit einem elektrischen Kontakt 134 des Verriegelungsmotors 22, wenn dieser in seiner hinteren, einer Entriegelungsstellung entsprechenden Stellung ist (Figur 9a).

Erhält der Verriegelungsmotor 22 von dem elektrischen Schalter 77b einen Startimpuls, setzt er sich in Richtung der Verriegelungsstellung V in Bewegung (Figur 9b). Dabei wird der Verriegelungsmotor 22 von einer Federanordnung 135 unterstützt, die den Verriegelungsantrieb 21b in Richtung der Verriegelungsstellung V belastet. Die Federanordnung 135 umfasst eine Schraubenfeder, die sich einerseits am Antriebsgehäuse 26, insbesondere dem Steuerungsgehäuse 68b, abstützt und andererseits am Getriebegehäuse 81 des Spanngetriebes 23a. Der Verriegelungsmotor 22 ist im Innenraum der Federanordnung 135 angeordnet.

Bei der Verriegelungsbewegung 91 gleitet eine Klinke 84b einer Mitnahmeeinrichtung 83b mit ihrer Gleitfläche 87 am Verriegelungsantrieb 21b entlang. Die Klinke 84b ist schwenkbeweglich am Sicherungsbolzen 59 mittels eines Schwenklagers 136 gelagert. Wenn der Verriegelungsantrieb 21b die Verriegelungsstellung V erreicht hat (Figur 9c), schwenkt die Klinke 84b in eine Mitnahme-Kopplungsstellung, bei der eine Mitnehmerfläche 95 an einem Mitnahmeanschlag 96 des Verriegelungsantriebs 21b anschlägt. Der Mitnahmeanschlag 96 ist beispielsweise an einem Anschlagvorsprung, der vor das Getriebegehäuse 81 in Richtung des Rastkörpers 32b vorsteht, vorgesehen.

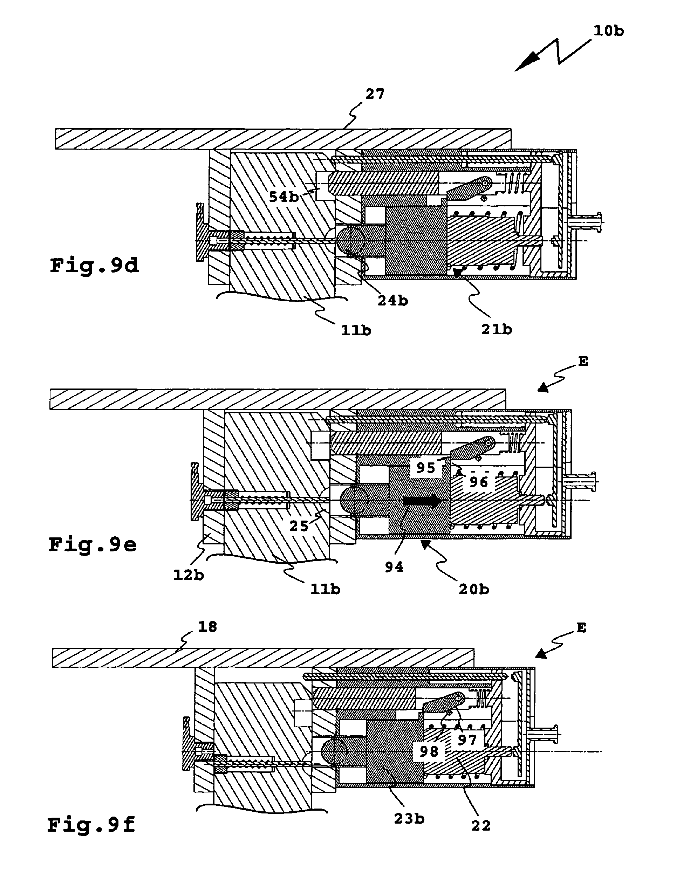

Bei einer Entriegelung der Verriegelungseinrichtung 20b nimmt der Verriegelungsantrieb 21b den Rastkörper 32b in seine Freigabestellung mit (Figuren 9d, 9e), wobei die Mitnehmerfläche 95 am Mitnahmeanschlag 96 anliegt. Am Ende der Entriegelungsbewegung 94 schlägt die Klinke 84b mit einer Freigabeanschlagfläche 97 an einem im Antriebsgehäuse 26 ortsfesten Freigabeanschlag 98 an, beispielsweise an einem quer zum Sicherungsbolzen 59 verlaufenden Stift, so dass die Klinke 84b vom Verriegelungsantrieb 21b wegschwenkt und die Mitnahmekopplung aufgehoben ist (Figur 9f).

Ob eine Verriegelung der Verriegelungseinrichtung 20b erfolgreich oder nicht erfolgreich ist, könnte beispielsweise durch ein Wegmesssystem mit einem Positionssensor erfasst werden, der im Antriebsgehäuse 26 angeordnet ist. Der Positionssensor erfasst beispielsweise die Verriegelungsstellung V, wenn der Verriegelungsantrieb 21b nach ganz vorne verfahren ist (Figur 9c). In Verbindung mit der sozusagen zweiten, redundanten Verriegelung mittels des Sicherungsbolzens 59b, der sozusagen einen zweiten Verriegelungsbolzen darstellt, würde diese Maßnahme an sich bereits eine hohe Sicherheit bieten.

Man könnte als zusätzliche Maßnahme noch vorsehen, dass bei der Verriegelungseinrichtung 20b eine Steuerung, z.B. eine vorteilhaft vorgesehene Steuerung in der Art der Steuerung 69, zudem überprüft, ob der Schalter 77b betätigt ist, wenn der Verriegelungsantrieb 21b in seiner Verriegelungsstellung V ist. Anhand dieser beiden Bedingungen wäre mit hoher Zuverlässigkeit sichergestellt, dass der Kupplungsarm 11b tatsächlich und vollständig in die Steckaufnahme 14 gesteckt ist (Figur 9b) und der Verriegelungsantrieb 21b in seiner Verriegelungsstellung V nicht sozusagen ins Leere läuft, sondern den Kupplungsarm 11b verriegelt (Figur 9c).

Bei der Anhängekupplung 10b ist jedoch ein anderes, noch höhere Verriegelungssicherheit ermittelndes Sensorkonzept verwirklicht:

Die Anhängekupplung 10b weist einen Formschluss-Sensor 137b zur Erfassung eines Formschlusses zwischen dem Formschlusselement 24b und der Formschlusskontur 25 auf. Der Formschluss-Sensor 137b umfasst einen am Halter 12b angeordneten Schalter. Der Schalter 138 ist zweckmäßigerweise in einem ihn mantelnden und kapselnden Schaltergehäuse 139 aufgenommen. Das Schaltergehäuse 139 ist beispielsweise in eine Bohrung der Seitenwand 34 eingesteckt, die der Verriegelungseinrichtung 20b gegenüberliegt. Der Formschluss-Sensor 137b ist beispielsweise mittels einer Verbindungsleitung 140 mit einer im Antriebsgehäuse 26 der Verriegelungseinrichtung 20b angeordneten Steuerung, zweckmäßigerweise in der Art der Steuerung 69, verbunden. Diese Steuerung wertet ein Formschluss-Signal des Formschluss-Sensors 137b aus, das dieser in Abhängigkeit eines Formschlusses zwischen dem Formschlusselement 24b und der Formschlusskontur 25 erzeugt.

Nunmehr ist es beispielsweise möglich, einen Formschluss-Sensor unmittelbar an der Formschlusskontur 25 anzuordnen, beispielsweise einen Mikroschalter, ein induktives oder kapazitives Messglied oder dergleichen, der oder das z.B. mittels einer Drahtlosverbindung oder Leitungsverbindung mit der zugeordneten Steuerung der Verriegelungseinrichtung und/oder einem Bordnetz des Kraftfahrzeugs verbunden ist. Beispielsweise kommuniziert ein optionaler Formschluss-Sensor 137a drahtgebunden mit der Steuerung 69 über eine Leitung 203 und bei gestecktem Kupplungsarm einander gegenüberliegenden und sich berührenden Kontaktflächen 204 am Kupplungsarm 11a und am 12a Halter und (Figur 6d).

Ferner ist eine drahtlose Kommunikation, z.B. per Funk, Infrarot, über Lichtleiter oder dergleichen, bei einem Formschluss-Sensor vorteilhaft. Beispielsweise ist eine drahtlose Kommunikation bei einem Formschluss-Sensor 137c der Anhängekupplung 11c realisiert.

Weiter kann auch am oder im beweglichen Formschlusselement ein Formschluss-Sensor vorgesehen sein, wie z.B. in Gestalt von Formschluss-Sensoren 137d, und 137e, die drahtlos oder drahtgebunden mit einer Einrichtung des Kraftfahrzeugs 19 und/oder einer optional zugeordneten Steuerung 69 der jeweiligen Anhängekupplung oder Verriegelungseinrichtung kommunizieren. Bei den Anhängekupplungen 10f und 10g sind optional Formschluss-Sensoren 137f und 137g vorgesehen, die vorzugsweise induktiv arbeiten und drahtlos kommunizieren. Ein induktiver oder ein kapazitiver Formschluss-Sensor kann z.B. eine Veränderung des magnetischen oder elektrischen Feldes erkennen, das abhängig davon ist, ob das Formschlusselement in der Formschlusskontur, insbesondere der Formschlussaufnahme, angeordnet ist. Der Formschluss-Sensor muss dann nicht unmittelbar an der Kontaktfläche zwischen Formschlusselement und Formschlusskontur sein, sondern kann auch etwas seitlich und/oder beabstandet sein, wie beispielsweise der Formschluss-Sensor 137f.

Bei der Verriegelungseinrichtung 20b ist hingegen ein anderes Formschluss-Sensor-Konzept vorgesehen, bei dem am Kupplungsarm 11b keine elektrischen Komponenten nötig sind.

Das Formschlusselement 24b verdrängt beim Einfahren in die Formschlusskontur 25 ein Tastelement 141, das in seinem unbetätigten Zustand vor den Formschlusskontur 25 vorsteht, in Richtung des Formschluss-Sensors 137b. Das Tastelement 141 bildet sozusagen eine Betätigungsstange oder einen Stößel. Das Tastelement 141 ist beweglich, vorliegend schiebebeweglich, am oder im Kupplungsarm 11b gelagert. Ein Tastende 143 zur Betätigung durch das Formschlusselement 24b steht im unbetätigten Zustand in die Formschlussaufnahme der Formschlusskontur 25 vor, jedoch nur so weit, dass es nicht vor eine Außenkontur 144 des Kupplungsarms 11b vorsteht und beispielsweise ein Einstecken in die Steckaufnahme 14 verhindern würde oder dabei beschädigt werden könnte.

Auch ein Betätigungsende 145 des Tastelements 141 steht im unbetätigten Zustand nicht vor die Außenkontur 144 des Kupplungsarms 11b vor (Figuren 9a, 9b). Wenn das Tastelement 141 jedoch aus der Formschlusskontur 25 herausbewegt wird, das heißt bei einer Betätigung durch das Formschlusselement 24b, steht das Betätigungsende 145 vor die Außenkontur 144 vor und betätigt den Formschluss-Sensor 137b. Das Betätigungsende 145 dringt dabei beispielsweise in das Schaltergehäuse 139 ein. Es versteht sich, dass auch eine andere Konfiguration getroffen sein könnte, bei der das Betätigungsende 145 beispielsweise im unbetätigten Zustand des Tastelements 141 hinter der Außenkontur 144 angeordnet ist und im betätigten Zustand nur bis zur Außenkontur 144 vorsteht, um beispielsweise einen elektrischen Kontakt an der Innenseite der Seitenwand 34 zu betätigen.

Das Tastelement 141 ist in einem Führungskanal 148 des Kupplungsarms 11b linear beweglich gelagert. Der Führungskanal 148 verläuft in der Nähe der Formschlusskontur 25. An seinem anderen Endbereich wird das Tastelement 141 durch eine Bohrung an einem Deckel 147 geführt, der eine Federkammer 146 verschließt, in der die Federanordnung 142 angeordnet ist. Die Federanordnung 142 stützt sich einerseits am Deckel 147 und andererseits am Tastelement 141 ab.

Man könnte einen mittleren Bereich des stangenartigen Tastelements 141 auch als ein Koppelglied 149 zur Kopplung des Betätigungsendes 145 und des Tastendes 143 bezeichnen.

Die Außenkontur 144 könnte man auch als eine Gleitkontur bezeichnen, mit der der Kupplungsarm 11b in die Steckaufnahme 14 gleitet.

Ein mittels des Formschluss-Sensors 137b ermittelter oder nicht vorhandener Formschluss wird von der Anhängekupplung 10b zweckmäßigerweise signalisiert. Beispielsweise steuert die Steuerung 69 dazu die Funktionsanzeigeeinrichtungen 116a-116c oder die Display-Funktionsanzeigeeinrichtung 119 an. Es ist auch möglich, dass die Steuerung 69 beispielsweise überprüft, ob nach Einschalten des Verriegelungsantriebs 21b in Richtung der Verriegelungsstellung V der Formschluss innerhalb einer vorbestimmten Zeitspanne erreicht ist. Wenn innerhalb dieser vorbestimmten Zeitspanne, beispielsweise 10 Sekunden, von dem Formschluss-Sensor 137b kein Formschluss gemeldet wird, gibt die Steuerung 69 eine Warnung aus, beispielsweise an die vorgenannten optischen Funktionsanzeigeeinrichtungen oder auch als Warnton an die akustische Funktionsanzeigeeinrichtung 117.

Ein Vorteil der Verriegelungseinrichtung 20a ist es, dass sie sowohl eine motorische Verriegelung mittels des Verriegelungsantriebs 21a als auch eine zusätzliche Rast-Verriegelung mit dem Sicherungsbolzen 59 integral in einer Baueinheit vereinigt, die zweckmäßigerweise im Antriebsgehäuse 26 angeordnet ist. Am Kupplungsarm 11a sind keine beweglichen Komponenten vorgesehen, so dass dieser einfach herstellbar und robust beim Gebrauch ist.

Alternativ ist es aber ohne weiteres möglich, bewegliche Verriegelungsmittel oder Rastmittel zumindest teilweise an einem Kupplungsarm anzuordnen. Dies ist beispielsweise bei der Anhängekupplung 10c realisiert. Eine Verriegelungseinrichtung 20c enthält einen an einem Halter 12c angeordneten Verriegelungsmotor 22 sowie ein Spanngetriebe 23c, beispielsweise ein Spindel-Mutter-Getriebe. Ein Formschlusselement 24c greift in seiner Verriegelungsstellung V in eine Formschlussaufnahme, beispielsweise eine Kugelkalotte oder einen Ring, am Kupplungsarm 11c ein, was in der Zeichnung dargestellt ist. Der Verriegelungsantrieb 21c ist integral am Halter 12c angeordnet. Ein separates Antriebsgehäuse gemäß dem vorher erläuterten modularen Konzept ist bei dieser Variante also nicht vorgesehen.

Der Kupplungsarm 11c verrastet beim Einstecken in die Steckaufnahme 14 selbsttätig, so dass ihn der Bediener nach dem Einstecken nicht mehr halten muss, bis der Verriegelungsantrieb 21c den Kupplungsarm 11c am Halter 12c festspannt. Für diese Haltefunktion sind Haltemittel 56 vorgesehen, die durch Rastmittel 57 gebildet sind.

Am Kupplungsarm 11c ist ein Rastkörper 32c in einer Lageraufnahme 160 beweglich, vorliegend schiebebeweglich gelagert. Der Rastkörper 32c ist durch eine Feder 161 belastet, die sich an einem geschlossenen Endbereich der Lageraufnahme 160 einerseits und am in die Lageraufnahme 160 eingesteckten Ende des Rastkörpers 32c abstützt. Der Rastkörper 32c steht im unbetätigten Zustand vor einen Außenumfang des Kupplungsarms 11c, der im Übrigen nicht polygonal sein muss, sondern beispielsweise auch eine runde oder elliptische Außenkontur aufweisen könnte, vor. Beim Einstecken in die Steckaufnahme 14 gleitet ein freies Ende des Rastkörpers 32c beispielsweise an einer Einführschräge 162 an einer Einführöffnung der Steckaufnahme 14 entlang und wird so nach radial innen in die Lageraufnahme 160 verdrängt, so dass der Rastkörper 32c nicht mehr vor die Außenkontur 144 vorsteht.

Allerdings kann der Rastkörper 32c auch durch eine Freigabe-Halteeinrichtung 163 in seiner Freigabestellung gehalten werden, in der er nicht vor die Außenkontur 144 vorsteht und die Einführschräge 162 nicht nötig ist. Ein Rastelement 164 der Freigabe-Halteeinrichtung 163 ist in einer Lageraufnahme 165 beweglich gelagert und durch eine Feder 166 in eine den Rastkörper 32c bezüglich des Kupplungsarms 11c verrastende Raststellung belastet. Prinzipiell wäre es möglich, ein Rastelement einer Freigabeeinrichtung beispielsweise unmittelbar am Armkörper eines Kupplungsarms anzuordnen. Beim Kupplungsarm 11c ist jedoch die umgekehrte Konfiguration getroffen, bei der die Lageraufnahme 165 und das Rastelement 164 am Rastkörper 32c vorgesehen sind. Die Lageraufnahme 165 verläuft winkelig, vorliegend rechtwinkelig, zu der Lageraufnahme 160 für den Rastkörper 32c. Somit ist das Rastelement 164 quer zur Bewegungsrichtung des Rastkörpers 32c beweglich und wirksam.

Wenn der Rastkörper 32c hinter die Außenkontur 144 verschoben ist und sein freies Ende nicht mehr vor diese vorsteht, rastet das Rastelement 164 in eine Rastaufnahme ein. Diese Rastaufnahme vorzugsweise an einem Führungskanal 168 für einen Auslöser 169 vorgesehen, der zum Auslösen und Freigeben des Rastkörpers 32c in Richtung seiner Raststellung dient. Der Führungskanal 168 und die Lageraufnahme 160 für den Rastkörper 32c sind zueinander winkelig, beispielsweise rechtwinkelig (Schrägstellungen wären möglich). Beim Einstekken des Kupplungsarms 11c schlägt der als Auslöserstift ausgestaltete Auslöser 169 an eine Wand der Steckaufnahme 14, beispielsweise eine obere Stirnwand des Halters 12c, an und verdrängt das Rastelement 164 aus seinem Rasteingriff mit der Rastaufnahme am Führungskanal 170. Dadurch kommt der Rastkörper 32c frei und kann in die als Rastaufnahme ausgebildete Rastkontur 54c des Halters 12c einrasten. Der Bediener muss den Kupplungsarm 11c für die anschließende motorische Verriegelung dann nicht mehr festhalten.

Zudem bildet der Rastkörper 32c einen Sicherungskörper, beispielsweise einen Sicherungsbolzen 59c, der den Kupplungsarm 11c unabhängig von der motorischen Verriegelung sicher, zumindest für einen Notbetrieb, am Halter 12c verriegelt.

Ein Lösen des Rasteingriffs des Rastkörpers 32c ist mittels einer mit dem Verriegelungsantrieb 21c gekoppelten Mitnahmeeinrichtung 83c auf einfache Weise möglich:

Die Rastaufnahme oder Rastkontur 54c bildet das vordere Ende eines Führungskanals 170, in dem ein Verdrängerkörper 171 der Mitnahmeeinrichtung 83c beweglich gelagert ist. Der Führungskanal 170 und die Lageraufnahme 160 liegen einander gegenüber, wenn der Kupplungsarm 11c in die Steckaufnahme 14 gesteckt ist. Der Führungskanal 170 verläuft parallel zu einem Führungskanal 30c für das Formschlusselement 24c.

Das Formschlusselement 24c und der beispielsweise als Verdrängerbolzen ausgestaltete Verdrängerkörper 171 sind durch ein Mitnahmegetriebe, vorzugsweise ein Umlenkgetriebe, miteinander gekoppelt. Das Mitnahmegetriebe umfasst beispielsweise einen als einen Schwenkhebel ausgestalteten Mitnehmer 172. Der Mitnehmer 172 ist bezüglich des Halters 12c an einem Lager 173 beweglich, insbesondere einem Schwenklager schwenkbeweglich, gelagert. Das Lager 173 ist zwischen dem Verdrängerkörper 171 und dem Verriegelungsantrieb 21c beziehungsweise dem von diesem betätigten Formschlusselement 24c angeordnet. Von dem Lager 173 abstehende Arme des als Schwenkhebel ausgestalteten Mitnehmers 172 sind mit dem Verdrängerkörper 171 und dem Formschlusselement 24c (oder einem dieses tragenden Formschlusselement-Träger) schwenkbeweglich gekoppelt. Beispielsweise greifen Lagervorsprünge 174 am Verdrängerkörper 171 und am Formschlusselement 24c in Lageraufnahmen an dem Mitnehmer 172 ein, die vorzugsweise als Langlöcher 175 ausgestaltet sind.

Bei einer Entriegelungsbewegung 94 des Verriegelungsantriebs 21c schwenkt der Mitnehmer 172 derart, dass er den Verdrängerkörper 171 in Richtung der Steckaufnahme 14 mitnimmt, wobei der Verdrängerkörper 171 den Rastkörper 32c aus der Rastaufnahme oder Rastkontur 54c verdrängt. Dann kommt der Kupplungsarm 11c aus dem Rasteingriff mit dem Halter 12c frei und kann aus der Steckaufnahme 14 entnommen werden. Das Mitnahmegetriebe bewirkt eine Bewegungsumkehr einer Entriegelungsbewegung des Verriegelungsantriebs 21c bezüglich des Verdrängerkörpers 171.

Auch bei der Anhängekupplung 10c ist die Bewegungskinematik vorteilhaft so getroffen, dass zunächst der Formschluss 24c, 25 aufgehoben wird, bevor die Rastverbindung 32c, 54c aufgehoben wird.

Ein Verrasten und Halten eines Kupplungsarms an einer Steckaufnahme vor der jeweiligen motorischen Verriegelung und zweckmäßigerweise motorischen Verspannung bietet zwar vorzugsweise eine zusätzliche Sicherheitsfunktion, zum Beispiel eine redundante mechanische Verriegelung, wie bei den vorstehenden Ausführungsbeispielen. Im Prinzip ist der Bedienkomfort aber auch mit Rastmitteln realisierbar, die lediglich eine Art Vorverrastung des Kupplungsarms in der Steckaufnahme ermöglichen. Dies ist bei den Anhängekupplungen 10d und 10e realisiert. Eine Haltekraft ihrer Haltemittel 56 ist nämlich so bemessen, dass sie gerade ausreicht, den Kupplungsarm 11d, 11e am Halter 12d, 12e zu halten, bis die motorische Verriegelung wirksam ist. Ein Zugbetrieb ist jedoch nicht möglich. Wenn auf den jeweils verrasteten Kupplungsarm 11d, 11e der Anhänger 17 aufgelastet wird, gelangen die Rastmittel 57 jeweils außer Eingriff, das heißt, der Kupplungsarm 11d, 11e ist durch Belastung durch den Anhänger 17 aus der Steckaufnahme 14 ausziehbar. Der Bedienkomfort beim motorischen Verriegeln ist jedoch nach wie vor vorhanden.

Bei der Anhängekupplung 10d sind Rastkörper 32d beweglich an Lageraufnahmen 176d am Halter 12d gelagert. Die Rastkörper 32d sind in ihre Raststellung durch Federn 177 belastet, die in den taschenartigen Lageraufnahmen 176d angeordnet sind. Die Rastkontur 54d ist am Kupplungsarm 11d vorgesehen und wird beispielsweise durch eine Rinne gebildet. Exemplarisch sind zwei einander gegenüberliegende Rastkörper 32d gezeigt, wobei auch weniger oder mehr Rastkörper an dem Halter 12d vorgesehen sein könnten.

Zum Schalten des Verriegelungsantriebs 21d, insbesondere zum Einschalten in Richtung der Verriegelungsstellung V, ist ein Schalter 178 im Bereich der Steckaufnahme 14 vorgesehen, beispielsweise an deren stirnseitigem Ende, der durch den Kupplungsarm 11d, insbesondere einen vor diesen vorstehenden Betätigungsvorsprung, betätigbar ist.

Bei der Anhängekupplung 10e ist der Rastkörper 32e beweglich am Kupplungsarm 11e angeordnet, nämlich in einer Lageraufnahme 176e. Auch der Rastkörper 32e ist durch eine Feder 177 in seine Raststellung belastet, in der er in eine Rastaufnahme 54e, beispielsweise einer Kugelkalotte oder einer ringförmigen Aufnahme, einrastet.

Eine Anhängekupplung 10f baut besonders kompakt, ist aber gemäß der Erfindung motorisch verriegelbar und/oder entriegelbar und weist zudem Haltemittel auf, die einen Kupplungsarm 11f nach dem Einstecken in eine Steckaufnahme 14 eines Halters 12f für eine motorische Verriegelung bereit halten. Die Steckaufnahme 14 ist im Innenraum eines hülsenartigen Aufnahmeabschnitts 180 des Halters 12a vorgesehen, vor den kragenartig ein Halterstützflansch 181 vorsteht, dessen von der Steckaufnahme 14 wegweisende, in der Zeichnung untere Fläche einen Halter-Anschlag 182 für einen Kupplungsarm-Anschlag 183 des Kupplungsarms 11f bildet. Der Kupplungsarm-Anschlag 183 ist an einem Kupplungsarm-Stützflansch 184 unterhalb des Steckendes 13 angeordnet. Der Kupplungsarm-Stützflansch 184 steht kragenförmig vor das Steckende 13 vor. Durch die flanschartige Ausgestaltung der Anschläge 182, 183 stützt sich der Kupplungsarm 11f im in die Steckaufnahme 14 eingesteckten Zustand großflächig am Halter 12f ab, was für einen sicheren Halt sorgt. Zudem ist eine Verdrehsicherung im Bereich der großflächigen Anschläge 182, 183 vorgesehen, wobei Formschlussvorsprünge am einen Anschlag in Formschlussaufnahmen am anderen Anschlag eingreifen. Die Vorsprünge sind beispielsweise durch Kugeln 185 am Kupplungsarm-Anschlag 183 gebildet, die in zugeordnete Kugelkalotten 186 am Halter-Anschlag 182 formschlüssig eingreifen.

Durch die großflächigen Flansche 181, 184, die vorzugsweise kreisförmig sind und einen Durchmesser haben, der vorzugsweise mindestens etwa gleich einer Länge des Steckendes 13 beziehungsweise der Steckaufnahme 14 ist (vorzugsweise sogar größer), ist es möglich, dass die Anhängekupplung 10f verhältnismäßig kurz baut. Das Steckende 13 und die Steckaufnahme 14 sind im Verhältnis zu den Flanschen 181, 184 kurz. Beispielsweise entspricht eine Länge des Steckendes 13 etwa dem 0,7- bis 1,5-fachen Durchmesser des Kupplungsarm-Stützflansches 184. Beim Halter 12f sind die Verhältnisse Steckaufnahme-Flansch vorteilhaft ähnlich. Jedenfalls ist es zweckmäßig, dass die Stützflansche 181, 184 korrespondierende Außenumfänge, insbesondere dieselben Durchmesser, aufweisen.

Wenn der Kupplungsarm 11f in den Halter 12f gesteckt ist, liegen die Anschläge 182, 183 im Wesentlichen flächig aneinander an. Dadurch ist eine großflächige Abstützung gegeben. Ferner ist dann eine federbelastete und/oder manuelle und/oder motorische Verriegelung des Kupplungsarms 11f am Halter 12f mittels der Verriegelungseinrichtung 20f möglich.

Die Verriegelungseinrichtung 20f umfasst einen Verriegelungsring 187 zur Betätigung von mindestens einem Formschlusselement 24f, vorzugsweise zwei oder drei Formschlusselementen 24f, das oder die in Führungskanälen 30f am Aufnahmeabschnitt 180 beweglich zwischen einer Verriegelungsstellung V, bei der sie in Formschlussaufnahmen oder Formschlusskonturen 25 am Kupplungsarm eingreifen, und einer Entriegelungsstellung E sind, in der die Formschlusselemente 24f außer Eingriff mit der Formschlusskontur oder den Formschlusskonturen 25 sind.

In der Entriegelungsstellung E können die Formschlusselemente 24f aus dem Bereich der Steckaufnahme 14 nach radial außen herausbewegt werden und in eine Freigabeausnehmung 189 im Innenraum des Verriegelungsrings 187 eingreifen. Der Verriegelungsring 187 ist schiebebeweglich am Aufnahmeabschnitt 180 gelagert. Der Verriegelungsring 187 wird vom Aufnahmeabschnitt 180 durchdrungen. Der Verriegelungsring 187 ist durch eine Feder 190 in seine Verriegelungsstellung belastet. Die Feder 190 ist eine Druckfeder, die sich am Verriegelungsring 187 und am Halter-Stützflansch 181 abstützt.

An sich sorgt die Feder 190 für eine automatische Verriegelung des Kupplungsarms 11f am Halter 12f. Die Feder 190 drückt nämlich den Verriegelungsring 187 vom Halter-Stützflansch 181 in seine Verriegelungsstellung V weg. Dann wird das mindestens eine Formschlusselement 24f durch eine Verriegelungsschräge 191 im Innern des Verriegelungsrings 187 durch den zugeordneten Führungskanal 30f hindurch in die Formschlussaufnahme oder -kontur 25 gedrückt, um den Kupplungsarm 11f formschlüssig zu halten. Die Verriegelungsschräge 191 schließt sich an die taschenartig erweiterte Freigabeausnehmung 189 an.

Nun wäre es prinzipiell möglich, den Verriegelungsring 187 manuell zu betätigen, vorteilhaft nur zur Entriegelung, gegebenenfalls aber auch zur Verriegelung. Man könnte beispielsweise einen Seilzug oder einen Betätigungsarm für den Verriegelungsring 187 vorsehen, der unter den Stoßfänger 43 vorragt und von einem Bediener ergriffen werden kann.

Zur Entriegelung könnte ein Bediener den Verriegelungsring 187 gegen die Kraft der Feder 190 in seine Entriegelungsstellung E drücken.

Bei der Anhängekupplung 11f ist jedoch ein anderes Bedienkonzept in einer motorischen Entriegelung, zweckmäßigerweise auch Verriegelung, vorgesehen:

Ein Verriegelungsantrieb 21f mit einem Verriegelungsmotor 22 treibt über ein Spanngetriebe 23f den Verriegelungsring 187 zwischen seiner Verriegelungsstellung V und seiner Entriegelungsstellung E an. Das Spanngetriebe 23f umfasst eine am Verriegelungsring 187 angeordnete Zahnung 192, mit der eine Schnecke 193, die zugleich eine Abtriebswelle des Verriegelungsmotors 22 bildet, kämmt. Die Schnecke 193 und die Zahnung 192 sind zweckmäßigerweise selbsthemmend. Der Verriegelungsantrieb 21f kann den Verriegelungsring 187 mit großer Kraft in seine Verriegelungsstellung V betätigen, wodurch der Kupplungsarm 11f am Halter 12f fest verspannbar ist.

Der Verriegelungsantrieb 21f bewegt den Verriegelungsring 187 linear auf und ab. Alternativ könnte auch eine Drehverriegelung mit einem Verriegelungsring 194 vorgesehen sein. Man könnte den Verriegelungsring 194 anstelle des Verriegelungsrings 187 verwenden, wobei der Verriegelungsring 194 dann drehbeweglich am Halter 12f gelagert wäre. Im Innenraum des Verriegelungsrings 194 ist mindestens eine dem Formschlusselement 24f zugeordnete eine Spannkulisse 195 mit einem schrägen Verlauf oder alternativ (nicht dargestellt) ein Spanngewinde, eine exzentrische Kontur oder dergleichen, angeordnet. Durch Drehen des Verriegelungsrings 194 wandert das Formschlusselement 24f an der Spannkulisse 195 entlang, um so zwischen der Verriegelungsstellung V und der Entriegelungsstellung E betätigt zu werden.

Bei einer Drehbetätigung des Verriegelungsrings 195 verlagert die Spannkulisse 195 oder eine sonstige Spannkontur das ihr jeweils zugeordnete Formschlusselement 24f nach radial innen oder lässt eine Bewegung nach radial außen zu.

Für einen Drehantrieb des Verriegelungsrings 194 kann an dessen Außenseite beispielsweise eine Verzahnung 196 vorgesehen sein. Wenn die Zähne der Verzahnung 196 parallel zur Längserstreckungsrichtung des Verriegelungsrings 194 verlaufen, könnte man beispielsweise den Verriegelungsantrieb 21f in im Wesentlichen horizontaler Stellung zur Betätigung des Verriegelungsrings 194 vorsehen, was eine besonders platzsparende Anordnung ist. In der Zeichnung ist eine Zahnung 196, z.B. eine Vertikal - oder Schrägzahnung, dargestellt, so dass man einen in der Zeichnung nicht dargestellten Verriegelungsantrieb beispielsweise auch winkelig zum Verriegelungsring 194 positionieren könnte.

Auch bei der Anhängekupplung 10f ist eine Vorverrastung mit Formschlusselementen 24f vorgesehen, die in eine ringförmige Rastkontur 54f am freien Ende des Steckendes 13 eingreifen. Die Formschlusselemente 24f sind nur schematisch dargestellt.

Zum Halten des Kupplungsarms 11f am Halter 12f, bis die motorische Verriegelungseinrichtung 20c ihn verriegelt, könnte auch beispielsweise ein Magnet 197, zum Beispiel ein Ringmagnet, vorgesehen sein.

Bei einer Anhängekupplung 10g ist das erfindungsgemäße Konzept, ein Formschlusselement 24g sozusagen tangential in eine Formschlusskontur 25 an einem Kupplungsarm 11g einzupressen oder einzuspannen, ebenfalls realisiert. Ein Verriegelungsmotor 22 eines Verriegelungsantriebs 21g betätigt über ein Spanngetriebe 23g einen Verdrängerkörper 198, an dem eine Spannschräge 199 für das Formschlusselement 24g, das zweckmäßigerweise eine Kugel ist, angeordnet ist. Der Verdrängerkörper 198 ist bolzenartig. Das Spanngetriebe 23g umfasst eine Spindel 200, die eine Abtriebswelle des Verriegelungsmotors 22 bildet, sowie ein Innengewinde am Verdrängerkörper 198, in den die Spindel 200 eingespannt ist.

Der Verdrängerkörper 198 ist in einem Führungsgehäuse 201 geführt, das seitlich, insbesondere tangential, an einem Haltergehäuse 15g des Halters 12g angeordnet ist. Der Verdrängerkörper 198 ist durch eine Feder 202 in seine Entriegelungsstellung E federbelastet. Zum Verriegeln des Kupplungsarms 11g schiebt der Verriegelungsmotor 22 durch das als ein Lineargetriebe ausgestaltete Spanngetriebe 23g den Verdrängerkörper 198 gegen die Kraft der Feder 202, wobei die Spannschräge 199 das Formschlusselement 24g in die Formschlusskontur 25 presst.

Die Haltergehäuse 15c-15g können auch in der Bauart der Haltergehäuse 15a und 15b gefertigt sein, d.h. zumindest teilweise aus Plattenstücken. Vorteilhaft ist dabei z.B. eine einfache Herstellung.

Die Haltergehäuse 15c-15e, insbesondere aber auch die Haltergehäuse 15f und 15g, könnten in einer nicht dargestellten Abwandlung auch Steckaufnahmen mit zumindest teilweise polygonaler Querschnittskontur haben. Dann sind sie beispielsweise zur Verwendung der Kupplungsarme 15a, 15b, 15h-15m geeignet.

Ferner sind Flansche in der Art der Flansche 181 und 184 auch an Haltergehäusen in der Bauart der Haltergehäuse 15a und 15b sowie an polygonalen Kupplungsarmen, z.B. in der Art der Kupplungsarme 15a, 15b, 15h-15m vorteilhaft anbringbar.

Es versteht sich, dass sämtliche in der obigen Beschreibung genannten Merkmale einzeln oder in beliebiger Kombination miteinander bei einer Anhängekupplung oder ihrer Steuerung einsetzbar sind.

## Patentansprüche

1. Anhängekupplung mit einem Halter (12a-12g) zur Befestigung an einem Kraftfahrzeug (19), insbesondere einem Personen-Kraftfahrzeug, mit einem in einer Einsteckrichtung (38) in eine Steckaufnahme (14) des Halters (12a-12g) einsteckbaren Kupplungsarm (11a-11m) zum Anhängen (17) eines Anhängers (17), und mit einer am Halter (12a-12g) angeordneten Verriegelungseinrichtung (20a-20g) zur Verriegelung des Kupplungsarms (11a-11m) an dem Halter (12a-12g), wobei die Verriegelungseinrichtung (20a-20g) mindestens ein Formschlusselement (24a-24g) umfasst, das in einer Verriegelungsstellung (V) zur Verriegelung des Kupplungsarms (11a-11m) am Halter (12a-12g) mit einer Formschlusskontur (25) in einem Formschlusseingriff ist, wobei die Verriegelungseinrichtung (20a-20g) einen Verriegelungsantrieb (21a-21g) mit einem Verriegelungsmotor (22) zum Verstellen des mindestens einen Formschlusselements (24a-24g) zwischen der Verriegelungsstellung (V) und einer Entriegelungsstellung (E) aufweist, in der die Verriegelungseinrichtung (20a-20g) zum Entfernen des Kupplungsarms (11a-11m) von dem Halter (12a-12g) entriegelt ist, wobei der Verriegelungsantrieb (21a-21g) ein Spanngetriebe (23a-23g) zum Verspannen des mindestens einen Formschlusselements (24a-24g) mit der Formschlusskontur (25) im Sinne eines Pressens enthält, **dadurch gekennzeichnet, dass** sie eine Steuerung (69) zum erneuten Anschalten des Verriegelungsantriebs (21a-21g) in Richtung der Verriegelungsstellung (V) für ein Spannen des Kupplungsarms (11a-11m) am Halter (12a-12g) aufweist, solange die Verriegelungseinrichtung (20a-20g) zur Einnahme der Verriegelungsstellung (V) angesteuert ist.

2. Anhängekupplung nach Anspruch 1, **dadurch gekennzeichnet, dass** das Spanngetriebe (23a-23g) ein Spindelgetriebe und/oder ein Schneckengetriebe und/oder ein Keilgetriebe umfasst.

3. Anhängekupplung nach Anspruch 1 oder 2, **dadurch gekennzeichnet, dass** das Spanngetriebe (23a-23g) ein an dem mindestens einen Formschlusselement (24a-24g) und/oder an einem das mindestens eine Formschlusselement (24a-24g) haltenden Formschlusselement-Träger (78) angeordnetes Schraubgewinde (79) zum Einschrauben in eine Schraubaufnahme aufweist.

4. Anhängekupplung nach Anspruch 3, **dadurch gekennzeichnet, dass** die Schraubaufnahme am Halter (12a-12g) und/oder an einem die Verriegelungseinrichtung (20a-20g) zumindest teilweise tragenden Verriegelungsträger angeordnet ist, der mit dem Halter (12a-12g) verbunden ist.

5. Anhängekupplung nach einem der vorhergehenden Ansprüche, **dadurch gekennzeichnet, dass** das Spanngetriebe (23a-23g) selbsthemmend ist.

6. Anhängekupplung nach einem der vorhergehenden Ansprüche, **dadurch gekennzeichnet, dass** das Spanngetriebe (23a-23g) ein eine Drehzahl des Verriegelungsantriebs (21a-21g) getriebeabtriebsseitig herabsetzendes Untersetzungsgetriebe umfasst.

7. Anhängekupplung nach einem der vorhergehenden Ansprüche, **dadurch gekennzeichnet, dass** der Verriegelungsantrieb (21a-21g) zumindest teilweise in einem Antriebsgehäuse (26) angeordnet ist, und dass das Antriebsgehäuse (26) einen Bestandteil des Halters (12a-12g) bildet oder als ein mit einem die Steckaufnahme (14) aufweisenden Haltergehäuse (15a-15g) des Halters (12a-12g) verbindbares Antriebsmodul ausgestaltet ist.

8. Anhängekupplung nach einem der vorhergehenden Ansprüche, **dadurch gekennzeichnet, dass** das mindestens eine Formschlusselement (24a-24g) eine Kugel und/oder einen Walze und/oder einen an seinem freien Ende insbesondere mindestens eine Einführschräge aufweisenden Bolzenvorsprung und/oder einen Keilkörper mit einer Keilschräge und/oder eine Zahnstruktur umfasst.

9. Anhängekupplung nach einem der vorhergehenden Ansprüche, **dadurch gekennzeichnet, dass** die Formschlusskontur (25) eine Keilschräge und/oder eine Rinne und/oder eine Kugelkalotte und/oder eine Sackloch und/oder eine Zahnstruktur umfasst.

10. Anhängekupplung nach einem der vorhergehenden Ansprüche, **dadurch gekennzeichnet, dass** die dem mindestens einen Formschlusselement (24a-24g) zugeordnete Formschlusskontur (25) an dem Kupplungsarm (11a-11m) angeordnet ist.

11. Anhängekupplung nach einem der vorhergehenden Ansprüche, **dadurch gekennzeichnet, dass** an dem Halter (12a-12g), insbesondere an einem die Steckaufnahme (14) aufweisenden Haltergehäuse (15a-15g), ein insbesondere ein Schraubgewinde (80) aufweisender Führungskanal (30a-30g) zur Führung des mindestens einen Formschlusselements (24a-24g) angeordnet ist.

12. Anhängekupplung nach einem der vorhergehenden Ansprüche, **dadurch gekennzeichnet, dass** die Steuerung (69) zum erneuten Anschalten des Verriegelungsantriebs (21a-21g) in Richtung der Verriegelungsstellung (V) für ein Spannen des Kupplungsarms (11a-11m) am Halter (12a-12g), solange die Verriegelungseinrichtung (20a-20g) zur Einnahme der Verriegelungsstellung (V) angesteuert ist, im Rahmen eines Zyklus' und/oder bei einer Lösebedingung ausgestaltet ist.

13. Anhängekupplung nach Anspruch 12, **dadurch gekennzeichnet, dass** die Lösebedingung ein Lösen des mindestens einen Formschlusselements (24a-24g) und der Formschlusskontur (25) um ein vorbestimmtes Längenmaß umfasst.

14. Anhängekupplung nach einem der vorhergehenden Ansprüche, **dadurch gekennzeichnet, dass** das mindestens eine Formschlusselement (24a-24g) seitlich auf einen Außenumfang eines Steckendes (13) des Kupplungsarms (11a-11m) wirkt.

15. Anhängekupplung nach einem der vorhergehenden Ansprüche, **dadurch gekennzeichnet, dass** die Verriegelungseinrichtung (20a-20g) zum Verspannen des Kupplungsarms (11a-11m) quer zu der Einsteckrichtung (38) und/oder längs der Einsteckrichtung (38) ausgestaltet ist.

16. Anhängekupplung nach Anspruch 15, **dadurch gekennzeichnet, dass** zu dem Verspannen längs der Einsteckrichtung (38) eine Spannkraft des Verriegelungsantriebs (21a-21g) entlang der Einsteckrichtung (38) verläuft und/oder die Formschlusskontur (25) oder das mindestens eine Formschlusselement (24a-24g) eine Konturgestaltung für eine Kraftumlenkung von einer quer zur Einsteckrichtung (38) verlaufenden Spannkraft (89) des Verriegelungsantriebs (21a-21g) in eine längs der Einsteckrichtung (38) verlaufende Spannkraft (90) aufweisen.

17. Anhängekupplung nach einem der vorhergehenden Ansprüche, **dadurch gekennzeichnet, dass** der Verriegelungsantrieb (21a-21g), insbesondere das Spanngetriebe (23a-23g), durch eine Federanordnung (135) in die Verriegelungsstellung (V) belastet ist.

18. Anhängekupplung nach einem der vorhergehenden Ansprüche, **dadurch gekennzeichnet, dass** die Verriegelungseinrichtung (20a-20g) einen Verdrängerkörper, insbesondere einen Schieber mit einer Schrägkontur und/oder einen Verriegelungsring, insbesondere mit mindestens einer Spannkulisse, zum Verstellen des mindestens einen Formschlusselements (24a-24g) aufweist.

19. Anhängekupplung nach einem der vorhergehenden Ansprüche, **dadurch gekennzeichnet, dass** der Verriegelungsmotor (22) ein elektrischer und/oder fluidischer Motor ist.

## Claims

1. Trailer coupling, comprising a holder (12a-12g) designed to be secured to a motor vehicle (19), in particular a car, further comprising a coupling arm (11a-11m) which can be plugged into a plug-in receptacle (14) of the holder (12a-12g) in a direction of insertion (38) for attaching (17) a trailer (17), and further comprising a locking device (20a-20g) mounted on the holder (12a-12g) for locking the coupling arm (11 a-11 m) on the holder (12a-12g), wherein the locking device (20a-20g) comprises at least one positive-locking element (24a-24g) which is, in a locking position (V), in positive engagement with a positive-locking contour (25) to lock the coupling arm (11a-11g) on the holder (12a-12g), wherein the locking device (20a-20g) comprises a locking drive (21a-21g) with a locking motor (22) for moving the at least one positive-locking element (24a-24g) between the locking position (V) and an unlocking position (E), in which the locking device (20a-20g) is unlocked for removing the coupling arm (11a-11m) from the holder (12a-12g), wherein the locking drive (21a-21g) includes a clamping mechanism (23a-23g) for clamping the at least one positive-locking element (24a-24g) against the positive-locking contour (25) in a pressing action, **characterised in that** it comprises a control unit (69) for a renewed start-up of the locking drive (21a-21g) towards the locking position (V) for clamping the coupling arm (11a-11m) to the holder (12a-12g) as long as the locking device (20a-20g) is actuated to adopt the locking position (V).

2. Trailer coupling according to claim 1, **characterised in that** the clamping mechanism (23a-23g) comprises a spindle gear and/or a worm gear and/or a wedge mechanism.

3. Trailer coupling according to claim 1 or 2, **characterised in that** the clamping machanism (23a-23g) comprises a screw thread (79) provided on the at least one positive-locking element (24a-24g) and/or on a positive locking element support (78) holding the at least one positive-locking element (24a-24g) for tightening into a screw socket.

4. Trailer coupling according to claim 3, **characterised in that** the screw socket is provided on the holder (12a-12g) and/or on a locking device support which at least partially supports the locking device (20a-20g) and which is connected to the holder (12a-12g).

5. Trailer coupling according to any of the preceding claims, **characterised in that** the clamping mechanism (23a-23g) is self-locking.

6. Trailer coupling according to any of the preceding claims, **characterised in that** the clamping mechanism (23a-23g) comprises a reduction gear which reduces a speed of the locking drive (21a-21g) on the output side.

7. Trailer coupling according to any of the preceding claims, **characterised in that** the locking drive (21a-21g) is at least partially located in a drive housing (26), and **in that** the drive housing (26) forms a part of the holder (12a-12g) or is designed as a drive module which can be connected to a holder housing (15a-15g) of the holder (12a-12g) which is provided with the plug-in receptacle (14).

8. Trailer coupling according to any of the preceding claims, **characterised in that** the at least one positive locking element (24a-24g) includes a ball and/or a roller and/or a bolt projection having at its free end in particular at least one feed slant and/or a wedge body with a wedge taper and/or a tooth structure.

9. Trailer coupling according to any of the preceding claims, **characterised in that** the positive locking contour (25) includes a wedge taper and/or a groove and/or a universal ball joint and/or a blind hole and/or a tooth structure.

10. Trailer coupling according to any of the preceding claims, **characterised in that** the positive locking contour (25) assigned to the at least one positive locking element (24a-24g) is located on the coupling arm (11a-11m).

11. Trailer coupling according to any of the preceding claims, **characterised in that** a guide channel (30a-30g) for guiding the at least one positive locking element (24a-24g), which in particular has a screw thread (80), is provided on the holder (12a-12g), in particular a holder housing (15a-15g) with the plug-in receptacle (14).

12. Trailer coupling according to any of the preceding claims, **characterised in that** the control unit (69) is designed, within a cycle and/or if a release condition is fulfilled, for a renewed start-up of the locking drive (21a-21g) towards the locking position (V) for clamping the coupling arm (11 a-11 m) to the holder (12a-12g) as long as the locking device (20a-20g) is actuated to adopt the locking position (V).

13. Trailer coupling according to claim 12, **characterised in that** the release condition comprises a release of the at least one positive locking element (24a-24g) and the positive locking contour (24) by a preset linear dimension.

14. Trailer coupling according to any of the preceding claims, **characterised in that** the at least one positive locking element (24a-24g) acts laterally on an outer circumference of a plug-in end (13) of the coupling arm (11a-11m).

15. Trailer coupling according to any of the preceding claims, **characterised in that** the locking device (20a-20g) is designed for clamping the coupling arm (11a-11m) at right angles to the direction of insertion (38) and/or along the direction of insertion (38).

16. Trailer coupling according to claim 15, **characterised in that**, for clamping along the direction of insertion (38), a clamping force of the locking drive (21a-21g) runs along the direction of insertion (38), and/or **in that** the positive locking contour (25) or the at least one positive locking element (24a-24g) has/have a contour design for diverting forces from a clamping force (89) of the locking drive (21a-21g) which runs at right angles to the direction of insertion (38) to a clamping force (90) running along the direction of insertion (38).

17. Trailer coupling according to any of the preceding claims, **characterised in that** the locking drive (21a-21g), in particular the clamping mechanism (23a-23g), is loaded towards the locking position (V) by a spring arrangement (135).

18. Trailer coupling according to any of the preceding claims, **characterised in that** the locking device (20a-20g) comprises a displacing element, in particular a slide with an inclined contour and/or a locking ring, in particular with at least one clamping gate, for shifting the at least one positive locking element (24a-24g).

19. Trailer coupling according to any of the preceding claims, **characterised in that** the locking motor (22) is an electric and/or fluidic motor.

## Revendications

1. Attelage présentant un support (12a-12g) pour la fixation à un véhicule automobile (19), en particulier une voiture particulière, un bras d'attelage (11a-11m) pouvant être emboîté dans un sens d'emboîtement (38) dans un logement à emboîtement (14) du support (12a-12g) pour l'attelage à une remorque (17), et un dispositif de verrouillage (20a-20g) disposé sur le support (12a-12g) pour le verrouillage du bras d'attelage (11a-11m) sur le support (12a-12g), sachant que le dispositif de verrouillage (20a-20g) comporte au moins un élément de complémentarité (24a-24g) en engagement par complémentarités de formes dans une position de verrouillage (V) pour le verrouillage du bras d'attelage (11a-11m) sur le support (12a-12g) avec un contour de complémentarité (25), sachant que le dispositif de verrouillage (20a-20g) présente un entraînement de verrouillage (21a-21g) avec un moteur de verrouillage (22) pour le réglage d'au moins un élément de complémentarité (24a-24g) entre la position de verrouillage (V) et une position de déverrouillage (E), dans laquelle le dispositif de verrouillage (20a-20g) est déverrouillé pour retirer le bras d'attelage (11a-11m) du support (12a-12g), sachant que l'entraînement de verrouillage (21a-21g) contient un mécanisme de serrage (23a-23g) pour le serrage d'au moins un élément de complémentarité (24a-24g) avec le contour complémentarité (25) au sens d'un pressage, **caractérisé en ce qu'**il présente une commande (69) pour commuter de nouveau l'entraînement de verrouillage (21a-21g) en direction de la position de verrouillage (V) pour un serrage du bras d'attelage (11a-11m) sur le support (12a-12g) tant que le dispositif de verrouillage (20a-20g) est commandé de sorte à occuper la position de verrouillage (V).

2. Attelage selon la revendication 1, **caractérisé en ce que** le mécanisme de serrage (23a-23g) comporte un mécanisme à broche et/ou un mécanisme à vis sans fin et/ou un mécanisme à clavette.

3. Attelage selon la revendication 1 ou 2, **caractérisé en ce que** le mécanisme de serrage (23a -23g) présente un filetage (79) disposé sur le support d'élément de complémentarité (78) maintenant au moins un élément complémentarité (24a-24g) et/ou sur un support d'élément complémentarité (78) maintenant au moins un élément positif (24a-24g) pour le vissage dans un logement fileté.

4. Attelage selon la revendication 3, **caractérisé en ce que** le logement fileté est disposé sur le support (12a-12g) et/ou sur un support de verrouillage portant au moins en partie le dispositif de verrouillage (20a-20g), lequel support de verrouillage est relié au support (12a-12g).

5. Attelage selon l'une quelconque des revendications précédentes, **caractérisé en ce que** le mécanisme de serrage (23a-23g) est autobloquant.

6. Attelage selon l'une quelconque des revendications précédentes, **caractérisé en ce que** le mécanisme de serrage (23a-23g) comporte un réducteur réduisant une vitesse de rotation de l'entraînement de verrouillage (21 a-21 g) côté sortie de mécanisme.

7. Attelage selon l'une quelconque des revendications précédentes, **caractérisé en ce que** l'entraînement de verrouillage (21a-21g) est disposé au moins en partie dans un boîtier d'entraînement (26) et **en ce que** le boîtier d'entraînement (26) forme un élément du support (12a-12g) ou est configuré comme un module d'entraînement pouvant être relié à un boîtier (15a-15g) du support (12a-12g) présentant le logement à emboîtement (14).

8. Attelage selon l'une quelconque des revendications précédentes, **caractérisé en ce qu'**au moins un élément de complémentarité (24a-24g) forme une bille et/ou un rouleau et/ou une saillie de boulon présentant, sur son extrémité libre, en particulier au moins un biais d'introduction et/ou un corps de clavette avec un biais de clavette et/ou une structure dentée.

9. Attelage selon l'une quelconque des revendications précédentes, **caractérisé en ce que** le contour de complémentarité (25) comporte un biais de clavette et/ou une rigole et/ou une calotte sphérique et/ou un trou borgne et/ou une structure dentée.

10. Attelage selon l'une quelconque des revendications précédentes, **caractérisé en ce que** le contour de complémentarité (25) associé au moins à un élément de complémentarité (24a-24g) est disposé sur le bras d'attelage (11a-11m).

11. Attelage selon l'une quelconque des revendications précédentes, **caractérisé en ce qu'**un canal de guidage (30a-30g) présentant en particulier un filetage (80) pour le guidage d'au moins un élément de complémentarité (24a-24g) est disposé sur le support (12a-12g), en particulier sur un boîtier de support (15a-15g) présentant le logement à emboîtement (14).

12. Attelage selon l'une quelconque des revendications précédentes, **caractérisé en ce que** la commande (69) est configurée pour commuter de nouveau l'entraînement de verrouillage (21a-21g) en direction de la position de verrouillage (V) pour un serrage du bras d'attelage (11 a-11 m) sur le support (12a-12g) tant que le dispositif de verrouillage (20a-20g) est commandé de sorte à occuper la position de verrouillage (V), dans le cadre d'un cycle' et/ou pour une condition de détachement.

13. Attelage selon la revendication 12, **caractérisé en ce que** la condition de détachement comporte un détachement d'au moins un élément de complémentarité (24a-24g) et du contour de complémentarité (25) d'une mesure de longueur prédéterminée.

14. Attelage selon l'une quelconque des revendications précédentes, **caractérisé en ce qu'**au moins un élément de complémentarité (24a-24g) agit latéralement sur une périphérie extérieure d'une extrémité d'emboîtement (13) du bras d'attelage (11 a-11 m).

15. Attelage selon l'une quelconque des revendications précédentes, **caractérisé en ce que** le dispositif de verrouillage (20a-20g) est configuré pour le serrage du bras d'attelage (11a-11m) transversalement au sens d'emboîtement (38) et/ou le long du sens d'emboîtement (38).

16. Attelage selon la revendication 15, **caractérisé en ce qu'**une force de serrage de l'entraînement de verrouillage (21a-21g) s'étend le long du sens d'emboîtement (38) pour le serrage le long du sens d'emboîtement (38) et/ou le contour de complémentarité (25) ou au moins un élément positif (24a-24g) présente une forme de contour pour une déviation d'une force de serrage (89) s'étendant transversalement au sens d'emboîtement (38) de l'entraînement de verrouillage (21a-21g) dans une force de serrage (90) s'étendant le long du sens d'emboîtement (38).

17. Attelage selon l'une quelconque des revendications précédentes, **caractérisé en ce que** l'entraînement de verrouillage (21a-21g), en particulier le mécanisme de serrage (23a-23g) est chargé par un ensemble de ressort (135) dans la position de verrouillage (V).

18. Attelage selon l'une quelconque des revendications précédentes, **caractérisé en ce que** le dispositif de verrouillage (20a-20g) présente un corps déplaceur, en particulier un coulisseau avec un contour en biais et/ou un anneau de verrouillage en particulier avec au moins une coulisse de serrage, pour le réglage d'au moins un élément de complémentarité (24a-24g).

19. Attelage selon l'une quelconque des revendications précédentes, **caractérisé en ce que** le moteur de verrouillage (22) est un moteur électrique et/ou fluidique.
